(19) Europäisches Patentamt
European Patent Office
Office européen des brevets

(11) EP 1 399 492 B1

(12) # EUROPÄISCHE PATENTSCHRIFT

(45) Veröffentlichungstag und Bekanntmachung des Hinweises auf die Patenterteilung:
**17.03.2010 Patentblatt 2010/11**

(21) Anmeldenummer: **02738140.9**

(22) Anmeldetag: **31.05.2002**

(51) Int Cl.:
***C08F 283/06*** *(2006.01)*

(86) Internationale Anmeldenummer:
**PCT/EP2002/006045**

(87) Internationale Veröffentlichungsnummer:
**WO 2002/100913 (19.12.2002 Gazette 2002/51)**

(54) **VERWENDUNG VON WASSERLOESLICHEN ODER WASSERDISPERGIERBAREN POLYETHERBLOECKE ENTHALTENDEN PFROPFPOLYMERISATEN ALS BESCHICHTUNGSMITTEL, MATRIXBILDNER UND VERPACKUNGSMATERIAL FÜR AGROCHEMIKALIEN**

USE OF WATER-SOLUBLE OR WATER-DISPERSIBLE, POLYETHER BLOCK CONTAINING GRAFT POLYMERS AS COATING AGENTS, MATRIX FORMERS AND/OR PACKAGING MATERIALS FOR AGROCHEMICALS

UTILISATION DE POLYMERES GREFFES, SE DISPERSANT OU SOLUBLES DANS L'EAU ET CONTENANT DES BLOCS POLYETHER, COMME AGENT D'ENDUCTION, PROMOTEUR MATRICIEL ET/OU MATERIAU D'EMBALLAGE POUR PRODUITS CHIMIQUES AGRICOLES

(84) Benannte Vertragsstaaten:
**AT BE CH CY DE DK ES FI FR GB GR IE IT LI LU MC NL PT SE TR**

(30) Priorität: **13.06.2001 DE 10128531**

(43) Veröffentlichungstag der Anmeldung:
**24.03.2004 Patentblatt 2004/13**

(73) Patentinhaber: **BASF SE**
**67056 Ludwigshafen (DE)**

(72) Erfinder:
- **GOTSCHE, Michael**
  **68167 Mannheim (DE)**
- **GOMEZ, Marcos**
  **69117 Heidelberg (DE)**
- **SCHNEIDER, Tanja**
  **64625 Bensheim (DE)**
- **MEFFERT, Helmut**
  **91438 Bad Windsheim (DE)**
- **SCHNEIDER, Karl-Heinrich**
  **67271 Kleinkarlbach (DE)**

(56) Entgegenhaltungen:
**EP-A- 0 140 828 WO-A-02/31096**
**US-A- 4 224 427**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 399 492 B1

Printed by Jouve, 75001 PARIS (FR)

## Beschreibung

Die Erfindung betrifft die Verwendung von wasserlöslichen oder wasserdispergierbaren, filmbildenden Pfropfpolymerisaten, die erhältlich sind durch radikalische Polymerisation von

(a) Vinylestern von aliphatischen $C_1$-$C_{24}$-Carbonsäuren in Gegenwart von

(b) Polyethern eines mittleren Molekulargewichts (Zahlenmittel) von mindestens 300 der allgemeinen Formel I

$$R^1\left(\left(R^2-O\right)_u\left(R^3-O\right)_v\left(R^4-O\right)_w\left[A-\left(R^5-O\right)_x\left(R^6-O\right)_y\left(R^7-O\right)_z\right]_s R^8\right)_n \qquad \mathrm{I}$$

in der die Variablen unabhängig voneinander folgende Bedeutung haben:

| | |
|---|---|
| $R^1$ | Hydroxy, Amino, $C_1$-$C_{24}$-Alkoxy, $R^9$-COO-, $R^9$-NH-COO-, Polyalkoholrest; |
| $R^2$ bis $R^7$ | $-(CH_2)_2-$, $-(CH_2)_3-$, $-(CH_2)_4-$, $-CH_2-CH(CH_3)-$, $-CH_2-CH(CH_2-CH_3)-$, $-CH_2-CHOR^{10}-CH_2-$; |
| $R^8$ | Wasserstoff, Amino-$C_1$-$C_6$-alkyl, $C_1$-$C_{24}$-Alkyl, $R^9$-CO-, $R^9$-NH-CO-; |
| $R^9$ | $C_1$-$C_{24}$-Alkyl; |
| $R^{10}$ | Wasserstoff, $C_1$-$C_{24}$-Alkyl, $R^9$-CO-; |
| A | -CO-O-, -CO-B-CO-O-, -CO-NH-B-NH-CO-O-; |
| B | $-(CH_2)_t-$, gewünschtenfalls substituiertes Arylen; |
| n | 1 oder, wenn $R^1$ einen Polyalkoholrest bedeutet, 1 bis 8; |
| s | 0 bis 500; |
| t | 1 bis 12; |
| u | 1 bis 5000; |
| v | 0 bis 5000; |
| w | 0 bis 5000; |
| x | 1 bis 5000; |
| y | 0 bis 5000; |
| z | 0 bis 5000, |

als Beschichtungsmittel, Matrixbildner und/oder Verpackungsmaterialien für Agrochemikalien sowie agrochemische Zubereitungen, welche diese Pfropfpolymerisate enthalten.

Um Hautkontakt mit Agrochemikalien zu vermeiden, werden diese Stoffe bekanntermaßen portionsweise in wasserlöslichen Folienbeuteln verpackt, die bei Kontakt mit Wasser zerfallen und die darin enthaltenen Agrochemikalien freisetzen. In der US-A-5 328 025 und der WO-A-97/37093 werden für diesen Zweck wasserlösliche Folien aus Polyvinylalkohol, der durch 85 bis 90 mol-%ige Hydrolyse von Polyvinylacetat erhalten wird, beschrieben.

Filme aus Polyvinylalkohol haben jedoch den Nachteil, daß sie in feuchter Umgebung miteinander verkleben. Dies tritt insbesondere dann ein, wenn mehrere Beutel übereinander liegen. Außerdem löst sich Polyvinylalkohol nur langsam und nicht immer vollständig in Wasser. Zudem neigt Polyvinylalkohol bei niedriger Umgebungsfeuchte zur Versprödung und zeigt eine dramatische Abnahme der Flexibilität. Deshalb werden Polyvinylalkohol üblicherweise

Weichmacher in Form von niedermolekularen Verbindungen zugesetzt. Diese treten häufig von der Hülle in das Füllgut über und führen zu Veränderungen der Wirkstoffe. Die Hülle verarmt dabei an den Weichmachern und wird im Laufe der Lagerung spröde und instabil.

Polyvinylalkohol wird auch zum direkten Überziehen von Agrochemikalien mit einem Schutzfilm eingesetzt. So wird in der JP-A-228 274/1999 die Belegung von bereits schwefelbeschichteten Düngemitteln mit einem Polyvinylalkoholfilm beschrieben. Die bereits genannten Nachteile beim Einsatz von Polyvinylalkohol als Verpackungsmaterial machen sich jedoch auch hier bemerkbar.

Weiterhin ist aus der DE-A-197 09 532 die Beschichtung von agrochemischen Zubereitungen mit Mischungen von Polyvinylactetat und N-Vinylpyrrolidon enthaltenden Polymeren bekannt.

In der EP-A-381 181 wird eine Wirkstofformulierung auf Basis von beschichteten wirkstoffhaltigen Kernen beschrieben, die Polyvinylalkohol mit 6 bis 18 mol-% Restacetatgehalt als Quellmittel enthalten. Agrochemikalien werden lediglich als Wirkstoffe erwähnt.

Aus der WO-A-91/03149 ist eine Saatgutformulierung basierend auf einer Torfmatrix bekannt, die Polyvinylalkohol als Bindemittel zusammen mit einem nichtionischen Tensid enthält.

Die bereits genannten nachteiligen Eigenschaften von Polyvinylalkohol wirken sich auch auf diese Zubereitungen negativ aus.

In den WO-A-92/15197 und 93/25074 werden wasserdispergierbare Granulate für den Pflanzenschutz beschrieben, die den Wirkstoff zusammen mit ethoxylierten Alkylphenolen, Ethylenoxid/Propylenoxid-Blockcopolymeren oder Polyethylenglykolen als hitzeaktivierbaren Bindemitteln und verschiedenen Hilfsstoffen, wie anionischen Tensiden, Sprengmittel und Füllstoffen, enthalten.

In der WO-A-00/18375 sowie der nicht vorveröffentlichten DE-A-100 50 958 wird die Verwendung von Pfropfpolymerisaten von Vinylestern auf Polyethern wie Polyalkylenglykolen als Überzugsmittel, Bindemittel und/oder filmbildender Hilfsstoff in pharmazeutischen Darreichungsformen bzw. als Beschichtungs- und Verpakkungsmittel für Wasch- und Reinigungsmittel beschrieben.

Solche Pfropfpolymerisate sind auch aus folgenden Schriften bekannt:

In der DE-B-1 077 430 wird ein Verfahren zur Herstellung von Pfropfpolymerisaten von Vinylestern beschrieben, bei dem man Polyalkylenglykole und/oder deren Derivate in mindestens einem Vinylester gegebenenfalls in Gegenwart von weiteren Lösungsmitteln löst und die erhaltene Lösung radikalisch polymerisiert. Die Pfropfpolymerisate werden für die Textilindustrie, als Haft- und Klebemittel, für die Lederindustrie, als Grundstoff für die Lackindustrie, für die Photoindustrie und als Haarpflegemittel empfohlen.

Aus der DE-B-1 081 229 ist ein Verfahren zur Herstellung wasserlöslicher modifizierter Polyvinylalkohole bekannt, die zu mindestens 50 Gew.-% aus Polyvinylalkoholeinheiten bestehen. Sie werden dadurch hergestellt, daß man Pfropfpolymerisate mindestens eines Vinylesters auf Polyalkylenglykolen im sauren oder alkalischen pH-Bereich vollständig oder teilweise verseift. Der Polyalkylenglykolanteil im Pfropfpolymerisat beträgt 0,1 bis 50 Gew.-%. Die modifizierten Polyvinylalkohole sind farblose bis wenig gefärbte lockere Pulver, die sich leicht in Wasser lösen. Sie sollen zur Herstellung von wasserlöslichen Verpackungsfolien, als Schlichte- und Appreturmittel und für kosmetische Artikel geeignet sein.

Aus der DE-B-1 094 457 sind modifizierte Polyvinylalkohole bekannt, die aus einem Pfropfpolymerisat mindestens eines Vinylesters und gegebenenfalls anderen, damit copolymerisierbaren Monomeren auf Polyalkylenglykolen bestehen, wobei das Pfropfpolymerisat so weit verseift ist, daß der entstandene modifizierte Polyvinylalkohol bereits in kaltem Wasser löslich ist, jedoch weniger als 50 Gew.-% an Polyvinylalkoholeinheiten enthält. Die modifizierten Polymerisate sollen sich als Schutzkolloid für die Herstellung von Polymerdispersionen, als Ausgangsstoff für die Herstellung von Schaumstoffen, als Material für die Herstellung weicher, leicht wasserlöslicher, klar durchsichtiger Folien, als Schlichte- und Appreturmittel und für kosmetische Artikel eignen.

Der Erfindung lag die Aufgabe zugrunde, den genannten Mängeln abzuhelfen und agrochemische Zubereitungen mit vorteilhaften Anwendungseigenschaften auf wirtschaftliche weise bereitzustellen. Insbesondere sollten die Zubereitungen staubfrei, gut handhabbar und einfach dosierbar sein, nicht zur Verklebung neigen und feinteilig dispergierbar sein.

Demgemäß wurde die Verwendung von wasserlöslichen oder wasserdispergierbaren, filmbildenden Pfropfpolymerisaten, die erhältlich sind durch radikalische Polymerisation von

(a) Vinylestern von aliphatischen $C_1$-$C_{24}$-Carbonsäuren in Gegenwart von

(b) Polyethern eines mittleren Molekulargewichts (Zahlenmittel) von mindestens 300 der allgemeinen Formel I

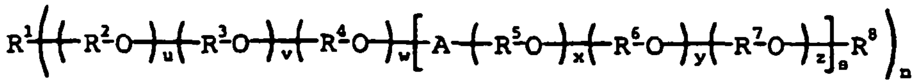 I

in der die Variablen unabhängig voneinander folgende Bedeutung haben:

| | |
|---|---|
| $R^1$ | Hydroxy, Amino, $C_1$-$C_{24}$-Alkoxl, $R^9$-COO-, $R^9$-NH-COO-, Polyalkoholrest; |
| $R^2$ bis $R^7$ | $-(CH_2)_2-$, $-(CH_2)_3-$, $-(CH_2)_4-$, $-CH_2-CH(CH_3)-$, $-CH_2-CH(CH_2-CH_3)-$, $-CH_2-CHOR^{10}-CH_2-$; |
| $R^8$ | Wasserstoff, Amino-$C_1$-$C_6$-alkyl, $C_1$-$C_{24}$-Alkyl, $R^9$-CO-, $R^9$-NH-CO-; |
| $R^9$ | $C_1$-$C_{24}$-Alkyl; |
| $R^{10}$ | Wasserstoff, $C_1$-$C_{24}$-Alkyl, $R^9$-CO-; |
| A | -CO-O-, -CO-B-CO-O-, -CO-NH-B-NH-CO-O-; |
| B | $-(CH_2)_t-$, gewünschtenfalls substituiertes Arylen; |
| n | 1 oder, wenn $R^1$ einen Polyalkoholrest bedeutet, 1 bis 8; |
| s | 0 bis 500; |
| t | 1 bis 12; |
| u | 1 bis 5000; |
| v | 0 bis 5000; |
| w | 0 bis 5000; |
| x | 1 bis 5000; |
| y | 0 bis 5000; |
| z | 0 bis 5000, |

als Beschichtungsmittel, Matrixbildner und/oder Verpackungsmaterial für Agrochemikalien gefunden.

Bevorzugte verwendete Pfropfpolymerisate sind den Unteransprüchen zu entnehmen.

Außerdem wurden agrochemische Zubereitungen in feinteiliger Form gefunden, die eine Formulierung einer oder mehrerer agrochemischer Wirkstoffe als Substratmaterial mit einer diese Pfropfpolymerisate enthaltenden Beschichtung aufweisen.

Weiterhin wurden agrochemische Zubereitungen in Granulatform gefunden, die einen oder mehrere agrochemische Wirkstoffe in einer diese Pfropfpolymerisate als Matrixbildner enthaltenden Matrix aufweisen.

Schließlich wurden agrochemische Zubereitungen in Form von Einzelportionen für die Dosierung gefunden, bei denen eine agrochemische Wirkstofformulierung portionsweise in diese Propfpolymerisate enthaltende Folien verpackt ist.

Die erfindungsgemäß verwendeten Pfropfpolymerisate sind aus der WO-A-00/18375 und der älteren deutschen Patentanmeldung 100 50 958.4 bekannt.

Als Pfropfgrundlage (b) werden generell Polyether der allgemeinen Formel I, ausgewählt aus der Gruppe, bestehend aus Polyalkylenoxiden auf Basis von Ethylenoxid, Propylenoxid und Butylenoxiden, Polytetrahydrofuran sowie Polyglycerin verwendet. Je nach Art der Monomerbausteine ergeben sich Polymere mit folgenden Struktureinheiten:

$-(CH_2)_2-O-$, $-(CH_2)_3-O-$, $-(CH_2)_4-O-$, $-CH_2-CH(CH_3)-O-$, $-CH_2-CH(CH_2-CH_3)-O-$, $-CH_2-CHOR^{10}-CH_2-O-$

Dabei kann es sich sowohl um Homopolymere als auch um Copolymere handeln, wobei die Copolymere statistisch verteilt sein oder als sogenannte Blockpolymere vorliegen können.

Die endständigen primären Hydroxylgruppen der auf Basis von Alkylenoxiden oder Glycerin hergestellten Polyether sowie die sekundären OH-Gruppen von Polyglycerin können sowohl frei vorliegen als auch ein- oder beidseitig mit $C_1$-$C_{24}$-Alkoholen verethert bzw. mit $C_1$-$C_{24}$-Carbonsäuren verestert sein. Sie können jedoch auch durch reduktive Aminierung mit Wasserstoff-Ammoniak-Gemischen unter Druck gegen primäre Aminogruppen ausgetauscht oder durch Cyanethylierung mit Acrylinitril und Hydrierung in Aminopropylendgruppen umgewandelt sein.

Alkylreste $R^1$ und $R^8$ bis $R^{10}$ können verzweigte oder unverzweigte $C_1$-$C_{24}$-Alkylreste sein, wobei $C_1$-$C_{12}$-Alkylreste bevorzugt und $C_1$-$C_6$-Alkylreste besonders bevorzugt sind. Als Beispiele seien Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, 2-Ethylhexyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl und n-Eicosyl genannt.

Das mittlere Molekulargewicht (Zahlenmittel) der Polyether (b) beträgt mindestens 300 und ist in der Regel $\leq$ 500 000. Es beträgt bevorzugt 500 bis 100 000, besonders bevorzugt 500 bis 50 000 und ganz besonders bevorzugt 1000 bis 10 000.

Vorteilhafterweise verwendet man Homopolymerisate des Ethylenoxids oder Copolymerisate mit einem Ethylenoxidanteil von 40 bis 99 Gew.-%. Für die bevorzugt einzusetzenden Ethylenoxidpolymerisate beträgt somit der Anteil an einpolymerisiertem Ethylenoxid 40 bis 100 mol-%. Als Comonomer für diese Copolymerisate kommen Propylenoxid, Butylenoxid und/oder Isobutylenoxid in Betracht. Geeignet sind beispielsweise Copolymerisate aus Ethylenoxid und Propylenoxid, Copolymerisate aus Ethylenoxid und Butylenoxid und/oder Isobutylenoxid sowie Copolymerisate aus Ethylenoxid, Propylenoxid und Butylenoxid oder Isobutylenoxid. Die Copolymerisate enthalten vorzugsweise 40 bis 99 mol-% Ethylenoxid und 1 bis 60 mol-% Propylenoxid oder 1 bis 30 mol-% Butylenoxid bzw. 1 bis 60 mol-% Propylenoxid und (Iso)Butylenoxid.

Neben geradkettigen können auch verzweigte Homo- oder Copolymerisate als Pfropfgrundlage verwendet werden.

Verzweigte Polymerisate können hergestellt werden, indem man beispielsweise an niedrigmolekulare Polyalkohole (Reste $R^1$ in der allgemeinen Formel I), z.B. Pentaerythrit, Glycerin und Zucker bzw. Zuckeralkohole, wie Saccharose, D-Sorbit und D-Mannit, Disaccharide, Ethylenoxid und gewünschtenfalls Propylenoxid und/oder Butylenoxide oder Polyglycerin anlagert.

Dabei können Polymerisate gebildet werden, bei denen mindestens eine, bevorzugt eine bis acht, besonders bevorzugt eine bis fünf der in dem Polyalkoholmolekül vorhandenen Hydroxylgruppen in Form einer Etherbindung mit dem folgenden Polyetherrest gemäß Formel I

$$-(R^2-O)_u-(R^3-O)_v-(R^4-O)_w-[A-(R^5-O)_x-(R^6-O)_y-(R^7-O)_z]_s-R^8.$$

verknüpft sein können.

Es ist aber auch möglich, Polyester von Polyalkylenoxiden und aliphatischen $C_1$-$C_{12}$-, bevorzugt $C_1$-$C_6$-Dicarbonsäuren oder aromatischen Dicarbonsäuren, z.B. Oxalsäure, Bernsteinsäure, Adipinsäure oder Terephthalsäure, mit mittleren Molekulargewichten von 1500 bis 25 000, beschrieben in der WO-A-95/21880, als Pfropfgrundlage zu verwenden.

Es ist weiterhin möglich, durch Phosgenierung hergestellte Polycarbonate von Polyalkylenoxiden oder auch Polyurethane von Polyalkylenoxiden und aliphatischen $C_1$-$C_{12}$-, bevorzugt $C_1$-$C_6$-Diisocyanaten oder aromatischen Diisocyanaten, z.B. Hexamethylendiisocyanat oder Phenylendiisocyanat, als Pfropfgrundlage zu verwenden.

Diese Polyester, Polycarbonate oder Polyurethane können bis zu 500, bevorzugt bis zu 100 Polyalkylenoxideinheiten enthalten, wobei die Polyalkylenoxideinheiten sowohl aus Homopolymeren als auch aus Copolymeren unterschiedlicher Alkylenoxide bestehen können.

Als Pfropfkomponente (a) werden Vinylester von aliphatischen, gesättigten oder ungesättigten $C_1$-$C_{24}$-Carbonsäuren, bevorzugt $C_1$-$C_{12}$-Carbonsäuren und besonders bevorzugt $C_1$-$C_6$-Carbonsäuren, eingesetzt. Als Beispiele seien im einzelnen genannt: Ameisensäure, Essigsäure, Propionsäure, Buttersäure, Valeriansäure, Isovaleriansäure, Capronsäure, Caprylsäure, Caprinsäure, Undecylensäure, Laurinsäure, Myristinsäure, Palmitinsäure, Palmitoleinsäure, Stearinsäure, Ölsäure, Arachinsäure, Behensäure, Lignocerinsäure, Cerotinsäure und Melissensäure, Essigsäure ist dabei

besonders bevorzugt.

Selbstverständlich können auch Mischungen der jeweiligen Vinylester (a) pfropfpolymerisiert werden.

Die Vinylester (a) können daneben auch in Mischung mit einem oder mehreren Comonomeren (c) eingesetzt werden. Die Comonomere (c) können hydrophob oder hydrophil sein, geeignet sind auch die üblicherweise als Vernetzer verwendeten Verbindungen. Wenn Comonomere (c) zum Einsatz kommen, beträgt ihr Anteil in der Mischung in der Regel 0,1 bis 30 Gew.-%, bevorzugt 1 bis 20 Gew.-%.

Geeignete hydrophobe Comonomere (c) können aus folgenden Gruppen ausgewählt werden, dabei können selbstverständlich auch Mischungen der Monomere eingesetzt werden:

($c_1$) $C_1$-$C_{24}$-Alkylester von monoethylenisch ungesättigten $C_3$-$C_8$-Carbonsäuren;

($c_2$) $C_1$-$C_{24}$-Hydroxyalkylester von monoethylenisch ungesättigten $C_3$-$C_8$-Carbonsäuren;

($c_3$) $C_1$-$C_{24}$-Alkyl-Vinylether;

($c_4$) N-Vinyllactame;

($c_5$) monoethylenisch ungesättigte $C_3$-$C_8$-Carbonsäuren.

Als monoethylenisch ungesättigte $C_3$-$C_8$-Carbonsäure eignen sich dabei z.B. Acrylsäure, Methacrylsäure, Maleinsäure, Fumarsäure, Itaconsäure und Aconitsäure.

Als Beispiele für die Alkylreste sei auf die bereits genannten $C_1$-$C_{24}$-Alkylreste und deren Hydroxylierungsprodukte verwiesen. Bevorzugt sind dabei verzweigte oder unverzweigte $C_1$-$C_4$-Alkylreste, insbesondere Methyl, Ethyl, n-Propyl, 1-Methylethyl, n-Butyl, 1-Methylpropyl, 2-Methylpropyl und 1,1-Dimethylethyl, und deren Hydroxylierungsprodukte.

Besonders bevorzugt sind Monomere der Gruppen ($c_1$) bis ($c_3$). Ganz besonders bevorzugt sind dabei Methyl (meth)acrylat, Ethyl (meth)acrylat, Hydroxymethyl(meth)acrylat, 2-Hydroxyethyl(meth)acrylat, Methylvinylether und Ethylvinylether.

Geeignete hydrophile Comonomere (c) sind z.B. monoethylenisch ungesättigte $C_3$-$C_8$-Carbonsäuren, wie Acrylsäure, Methacrylsäure, Maleinsäure, Fumarsäure, Itaconsäure und Aconitsäure, sowie auch N-Vinyllactame, wie N-Vinylpyrrolidon, N-Vinylimidazol und N-Vinylcaprolactam.

Bevorzugte hydrophile Comonomere (c) sind dabei Acrylsäure, Methacrylsäure und N-Vinylpyrrolidon.

Geeignete üblicherweise als Vernetzer eingesetzte Comonomere (c) sind Verbindungen, die mindestens zwei ethylenisch ungesättige nichtkonjugierte Doppelbindungen im Molekül enthalten. Bevorzugte Beispiele sind Alkylenbisacrylamide, wie Methylenbisacrylamid und N,N'-Acryloylethylendiamin, Vinylalkylenharnstoffe, wie N,N'-Divinylethylenharnstoff und N,N'-Divinylpropylenharnstoff, Ethyliden-bis-3-(N-Vinylpyrrolidon), N,N'-Divinylimidazolyl(2,2')butan, 1,1'-Bis-(3,3'-vinylbenzimidazolid-2-on)1,4-butan, Alkylenglykoldi(meth)acrylate, wie Ethylenglykoldi(meth)acrylat, Tetraethylenglykoldi(meth)acrylat und Diethylenglykoldi(meth)acrylat, aromatische Divinylverbindungen, wie Divinylbenzol und Divinyltoluol, sowie Vinylacrylat, Allyl(meth)acrylat, Divinyldioxan, Pentaerythrittriallylether und Triallylamine.

Je nach Pfropfungsgrad können die erfindungsgemäß verwendeten Polymerisate sowohl reine Pfropfpolymerisate als auch Mischungen von Pfropfpolymerisaten mit ungepfropften Polyethern (b) und Homo- oder Copolymerisaten der Vinylester (a) und gewünschtenfalls weiteren Monomeren (c) sein.

Bevorzugt werden Polymerisate verwendet, die erhältlich sind durch Polymerisation von

(a) mindestens einem Vinylester von aliphatischen $C_1$-$C_{24}$-Carbonsäuren in Gegenwart von

(b) Polyethern eines mittleren Molekulargewichts (Zahlenmittel) von 500 bis 100 000 der allgemeinen Formel Ia

$$R^1\left(\left(-R^2-O-\right)_u\left(-R^3-O-\right)_v\left(-R^4-O-\right)_w R^8\right)_n \qquad \mathbf{Ia}$$

in der die Variablen unabhängig voneinander folgende Bedeutung haben:

$R^1$ Hydroxy, Amino, $C_1$-$C_{24}$-Alkoxy, $R^9$-COO-, $R^9$-NH-COO-, Polyalkoholrest;

$R^2$ bis $R^4$ $(CH_2)_2$-, $-(CH_2)_3$-, $-(CH_2)_4$-, $-CH_2-CH(CH_3)$-, $-CH_2-CH(CH_2-CH_3)$-, $-CH_2-CHOR^{10}-CH_2$-;

$R^8$ Wasserstoff, Amino-$C_1$-$C_6$-alkyl, $C_1$-$C_{24}$-Alkyl. $R^9$-CO-, $R^9$-NH-CO-;

$R^9$ $C_1$-$C_{24}$-Alkyl;

$R^{10}$ Wasserstoff, $C_1$-$C_{24}$-Alkyl, $R^9$-CO-;

n 1 oder, wenn $R^1$ einen Polyalkoholrest bedeutet, 1 bis 8;

u 1 bis 5000;

v 0 bis 5000;

w 0 bis 5000.

Besonders bevorzugt werden Polymerisate verwendet, die erhältlich sind durch Polymerisation von

(a) mindestens einem Vinylester von aliphatischen $C_1$-$C_{12}$-Carbonsäuren in Gegenwart von

(b) Polyethern eines mittleren Molekulargewichts (Zahlenmittel) von 500 bis 50 000 der allgemeinen Formel Ia, in der die Variablen unabhängig voneinander folgende Bedeutung haben:

$R^1$ Hydroxy, $C_1$-$C_{12}$-Alkoxy, Polyalkoholrest;

$R^2$ bis $R^4$ $-(CH_2)_2-$, $-(CH_2)_3-$, $-(CH_2)_4-$, $-CH_2-CH(CH_3)-$, $-CH_2-CH(CH_2-CH_3)-$, $-CH_2-CHOR^{10}-CH_2-$;

$R^8$ und $R^{10}$ Wasserstoff, $C_1$-$C_{12}$-Alkyl;

n 1, oder wenn $R^1$ einen Polyalkoholrest bedeutet, 1 bis 5;

u 2 bis 2000;

v 0 bis 2000;

w 0 bis 2000.

Ganz besonders bevorzugt werden Polymerisate verwendet, die erhältlich sind durch Polymerisation von

(a) mindestens einem Vinylester von aliphatischen $C_1$-$C_6$-Carbonsäuren, insbesondere Vinylacetat, in Gegenwart von

(b) Polyethern eines mittleren Molekulargewichts (Zahlenmittel) von 1000 bis 10 000 der allgemeinen Formel Ia, in der die Variablen unabhängig voneinander folgende Bedeutung haben:

$R^1$ Hydroxy, $C_1$-$C_6$-Alkoxy, vorzugsweise Hydroxy;

$R^2$ bis $R^4$ $-(CH_2)_2-$, $-(CH_2)_3-$, $-(CH_2)_4-$, $-CH_2-CH(CH_3)-$, $-CH_2-CH(CH_2-CH_3)-$, $-CH_2-CHOR^{10}-CH_2-$;

$R^8$ Wasserstoff, $C_1$-$C_6$-Alkyl, vorzugsweise Wasserstoff;

$R^{10}$ Wasserstoff, $C_1$-$C_6$-Alkyl;

n 1;

u 5 bis 500;

v 0 bis 500, vorzugsweise 0;

w 0 bis 500, vorzugsweise 0.

Pfropfpolymerisate, deren Pfropfgrundlage ein Polyglycerin ist, sind erhältlich sind durch Polymerisation von

(a) mindestens einem Vinylester von aliphatischen $C_1$-$C_{24}$-Carbonsäuren in Gegenwart von

(b) Polyglycerinen der allgemeinen Formel Ib

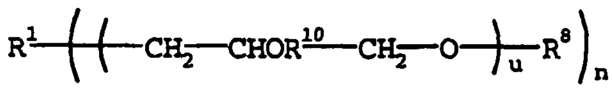

Ib

in der die Variablen unabhängig voneinander folgende Bedeutung haben:

| | |
|---|---|
| $R^1$ | Hydroxy, $C_1$-$C_{24}$-Alkoxy, $R^9$-COO-, Polyalkoholrest; |
| $R^8$ und $R^{10}$ | Wasserstoff, $C_1$-$C_{24}$-Alkyl, $R^9$-CO-; |
| $R^9$ | $C_1$-$C_{24}$-Alkyl; |
| n | 1 oder, wenn $R^1$ einen Polyalkoholrest bedeutet, 1 bis 8; |
| u | 1 bis 2000. |

Bevorzugte Pfropfpolymerisate auf Basis von Polyglycerinen sind erhältlich durch Polymerisation von

(a) mindestens einem Vinylester von aliphatischen $C_1$-$C_6$-Carbonsäuren in Gegenwart von
(b) Polyglycerinen der allgemeinen Formel Ib, in der die Variablen unabhängig voneinander folgende Bedeutung haben:

$R^1$ Hydroxy, $C_1$-$C_6$-Alkoxy;

$R^8$ und $R^{10}$ Wasserstoff, $C_1$-$C_6$-Alkyl;

n 1;

u 1 bis 100.

Neben linearen Polyglycerinen können auch verzweigte und/oder cyclische Polyglycerine als Pfropfgrundlage verwendet werden.

Die K-Werte der Pfropfpolymerisate betragen üblicherweise 10 bis 200, bevorzugt 15 bis 150, besonders bevorzugt 15 bis 100 und ganz besonders bevorzugt 20 bis 80 (bestimmt nach H. Fikentscher, Cellulose-Chemie, Bd. 13, S. 58 bis 64 und 71 bis 74 (1932) in N-Methylpyrrolidon bei 25°C und Polymerkonzentrationen, die je nach K-Wert-Bereich bei 0,1 Gew.-% bis 5 Gew.-% liegen). Der jeweils gewünschte K-Wert läßt sich in an sich bekannter Weise durch die Zusammensetzung der Einsatzstoffe einstellen.

Zur Herstellung der erfindungsgemäß verwendeten Propfpolymerisate können die Vinylester (a) und gewünschtenfalls die Comonomere (c) in Gegenwart der Polyether (b) als Pfropfgrundlage sowohl mit Hilfe von Radikale bildenden Initiatoren als auch durch Einwirkung energiereicher Strahlung, worunter auch die Einwirkung energiereicher Elektronen verstanden werden soll, polymerisiert werden.

Die Polymerisation kann beispielsweise im Sinne einer Lösungspolymerisation, Polymerisation in Substanz, Emulsionspolymerisation, umgekehrten Emulsionspolymerisation, Suspensionspolymerisation, umgekehrten Suspensionspolymerisation oder Fällungspolymerisation geführt werden.

Bei der bevorzugt durchgeführten Polymerisation in Substanz kann man so vorgehen, daß man den Polyether (b), insbesondere das Polyalkylenoxid (b), in mindestens einem Vinylester (a) und gewünschtenfalls einem oder mehreren Comonomeren (c) löst und die Mischung nach Zugabe eines Polymerisationsinitiators polymerisiert. Die Pfropfpolymerisation kann auch halbkontinuierlich durchgeführt werden, indem man zunächst einen Teil, z.B. 10 Gew.-%, dieser Mischung vorlegt und auf Polymerisationstemperatur erhitzt und nach dem Anspringen der Polymerisation den Rest der zu polymerisierenden Mischung nach Fortschritt der Polymerisation zugibt. Man kann jedoch auch den Polyether (b) in einem Reaktor vorlegen und auf Polymerisationstemperatur erhitzen und Vinylester (a) und gewünschtenfalls

Comonomer (c) (getrennt oder als Mischung) und Polymerisationsinitiator entweder auf einmal, absatzweise oder vorzugsweise kontinuierlich zufügen und polymerisieren.

Das Gewichtsverhältnis der als Pfropfgrundlage verwendeten Polyether (b) zu den vinylestern (a) bzw. der Mischung der Vinylester

(a) und der Comonomere (c) beträgt in der Regel 1 : 0,5 bis 1 : 50, bevorzugt 1 : 1,5 bis 1 : 35 und besonders bevorzugt 1 : 2 bis 1 : 30.

Als Polymerisationsinitiatoren eignen sich vor allem organische Peroxide, wie Diacetylperoxid, Dibenzoylperoxid, Succinylperoxid, Di-tert.-butylperoxid, tert.-Butylperbenzoat, tert.-Butylperpivalat, tert.-Butylpermaleinat, Cumolhydroperoxid, Diisopropylperoxidicarbonat, Bis-(o-toluyl)-peroxid, Didecanoylperoxid, Dioctanoylperoxid, Dilauroylperoxid, tert.-Butylperisobutyrat, tert.-Butylperacetat, Di-tert.-amylperoxid, tert.-Butylhydroperoxid und Mischungen der genannten Initiatoren, sowie Redoxinitiatoren und Azostarter.

Üblicherweise werden, bezogen auf den Vinylester (a) bzw. die Mischung aus Vinylester (a) und Comonomer (c), 0,01 und 10 Gew.-%, vorzugsweise 0,3 und 5 Gew.-%, Initiator eingesetzt.

Die Polymerisationstemperatur liegt in der Regel bei 40 bis 200˚C, bevorzugt bei 50 bis 140˚C und besonders bevorzugt bei 60 bis 110˚C.

Die Polymerisation wird üblicherweise unter atmosphärischem Druck durchgeführt, kann jedoch auch unter vermindertem oder erhöhtem Druck, z.B. bei 1 bis 5 bar, ablaufen.

Falls gewünscht, kann die oben beschriebene Pfropfpolymerisation auch in einem Lösungsmittel durchgeführt werden. Geeignete organische Lösungsmittel sind beispielsweise aliphatische und cycloaliphatische einwertige Alkohole, wie Methanol, Ethanol, n-Propanol, Isopropanol, n-Butanol, sek.-Butanol, tert.-Butanol, n-Hexanol und Cyclohexanol, mehrwertige Alkohole, z.B. Glykole, wie Ethylenglykol, Propylenglykol und Butylenglykol, und Glycerin, Alkylether mehrwertiger Alkohole, z.B. Methyl- und Ethylether der genannten Glykole, sowie Etheralkohole, wie Diethylenglykol und Triethylenglykol, sowie cyclische Ether, wie Dioxan.

Die Pfropfpolymerisation kann auch in Wasser als Lösungsmittel durchgeführt werden. Sollen bei der Polymerisation gebildete wasserunlösliche Produkte direkt in gelöster Form anfallen, können mit Wasser mischbare organische Lösungsmittel bei der Polymerisation zugesetzt werden, z.B. einwertige Alkohole mit 1 bis 3 Kohlenstoffatomen, Aceton oder Dimethylformamid.

Man kann jedoch bei der Pfropfpolymerisation in Wasser auch so verfahren, daß man die wasserunlöslichen Pfropfpolymerisate durch Zugabe üblicher Emulgatoren oder Schutzkolloide (z.B. Polyvinylalkohol) in eine feinteilige Dispersion überführt. Als Emulgatoren eignen sich beispielsweise ionische oder nichtionische Tenside, deren HLB-Wert im Bereich von 3 bis 13 liegt. Zur Definition des HLB-Werts sei auf die Veröffentlichung von W.C. Griffin, J. Soc. Cosmetic Chem., Band 5, 249 (1954) hingewiesen. Falls bei der Propfpolymerisation Tenside eingesetzt werden, beträgt deren Menge im allgemeinen 0,1 bis 5 Gew.-%, bezogen auf das Pfropfpolymerisat.

Üblicherweise verwendet man 5 bis 200 Gew.-%, vorzugsweise 10 bis 100 Gew.-%, organisches Lösungsmittel, Wasser oder Gemisch aus Wasser und organischem Lösungsmittel, bezogen auf das Pfropfpolymerisat.

Zur Erhöhung der Hydrophilie der erfindungsgemäß verwendeten Pfropfpolymerisate können die Estergruppen nach der Polymerisation vollständig oder teilweise verseift (hydrolysiert) werden. Die Verseifung erfolgt in an sich bekannter Weise durch Zugabe einer Base, bevorzugt einer alkoholischen Alkalimetallhydroxidlösung, insbesondere einer methanolischen Natrium- oder Kaliumhydroxidlösung, bei Temperaturen im Bereich von 10 bis 70˚C, bevorzugt 15 bis 30˚C.

Der Verseifungsgrad hängt ab von der Menge der eingesetzten Base, der Verseifungstemperatur und der Verseifungszeit und kann entsprechend von 0 bis 100 mol-% betragen. Insbesondere liegt der Verseifungsgrad bei 20 bis 100 mol-%, bevorzugt bei 40 bis 100 mol-%, besonders bevorzugt bei 65 bis 100 mol-% und ganz besonders bevorzugt bei 80 bis 100 mol-%.

Der Feststoffgehalt der nach Austausch des Alkohols durch Wasser z.B. durch Wasserdampfdestillation erhaltenen wäßrigen Polymerisat-Dispersionen bzw. -Lösungen beträgt in der Regel 10 bis 70 Gew.-%, bevorzugt 15 bis 65 Gew.-%, besonders bevorzugt 20 bis 60 Gew.-%.

Je nach Verseifungsgrad und Konzentration erhält man üblicherweise wäßrige Dispersionen oder Lösungen der erfindungsgemäß verwendeten Pfropfpolymerisate mit einer Viskosität kleiner 1000 mPas. Bei einer Polymerisatkonzentration von 20 Gew.-% beträgt die Viskosität insbesondere 5 bis 400 mPas, vor allem 10 bis 250 mPas.

Die Pfropfpolymerisat-Dispersionen bzw. -Lösungen können mit Hilfe verschiedener Trocknungsverfahren, z.B. Sprühtrocknung, Fluidized Spray Drying, Walzentrocknung oder Gefriertrocknung, in Pulverform überführt werden. Wegen der geringen Viskosität der Lösungen bzw. Dispersionen ist die Sprühtrocknung bevorzugt. Aus dem so erhaltenen Pfropfpolymerisat-Trockenpulver läßt sich durch Eintragen in Wasser erneut eine wäßrige Dispersion bzw. Lösung herstellen. Pulverförmige Pfropfpolymerisate sind gegenüber Dispersionen und Lösungen, insbesondere wäßrigen Dispersionen und Lösungen, besser lagerfähig, einfacher zu transportieren und neigen weniger zu Keimbefall.

Die Pfropfpolymerisate eignen sich hervorragend zur Herstellung agrochemischer Zubereitungen, wobei sie zur Beschichtung agrochemischer Wirkstofformulierungen, als Matrixbildner für agrochemische Wirkstoffe oder in Form von Folien als Verpackungsmaterial für agrochemische Wirkstofformulierungen eingesetzt werden. Sie ermöglichen dabei nicht nur eine aromadichte Verkapselung der Wirkstoffe, sondern wirken vorteilhaft gleichzeitig als Dispergiermittel bei der Anwendung der in Kontakt mit Wasser freigesetzten Wirkstoffe. Die erfindungsgemäßen Zubereitungen sind staubfrei sowie gut handhabbar und einfach dosierbar, wobei ein Kontakt der Wirkstoffe mit der Haut des Anwenders erfolgreich vermieden wird.

Zur Beschichtung agrochemischer Wirkstofformulierungen können die Pfropfpolymerisate in reiner Form oder aber zusammen mit den üblichen Hilfsstoffen auf ein wirkstoffhaltiges Substrat, z.B. auf agrochemische Formulierungen in feinteiliger Form, wie Agrochemikalien enthaltende Tabletten, Granulate, z.B. wasserdispergierbare Granulate, Pellets, Schuppen, Stränge, Kugeln oder Pulver, z.B. wasserlösliche oder wasserverdünnbare Pulver, oder auf Saatgut appliziert werden. Übliche Hilfsstoffe sind z.B. Farbpigmente zur Einfärbung, Weißpigmente, wie Titandioxid, zur Erhöhung der Deckkraft, Talkum und Siliciumdioxid als Antiklebemittel, Polyethylenglykole, Glycerin, Propylenglykol, Triacetin und Triethylcitrat als Weichmacher und oberflächenaktive Stoffe, wie Natriumlaurylsulfat, zur Verbesserung des Benetzungsverhaltens.

Die das erfindungsgemäß zu verwendende Pfropfpolymerisat enthaltende Beschichtung kann nach gebräuchlichen Verfahren auf das Substrat aufgebracht werden, z.B, durch Coaten in der Wirbelschicht oder im Horizontaltrommelcoater, nach dem Tauchschwertverfahren oder dem Kesselcoatingverfahren.

Die das Pfropfpolymerisat enthaltende Beschichtung weist eine Dicke von in der Regel 1 bis 1000 $\mu$m, bevorzugt 5 bis 500 $\mu$m, besonders bevorzugt 10 bis 100 $\mu$m, auf.

Die erfindungsgemäß zu verwendenden Pfropfpolymerisate können mit anderen Filmbildnern bzw. Polymeren kombiniert werden. Geeignete Gewichtsverhältnisse liegen hierfür üblicherweise im Bereich von 1:9 bis 9:1.

Beispiele für hierzu geeignete Filmbildner bzw. Polymere sind:

> Polyvinylpyrrolidon; Polyvinylpyrrolidon-Copolymere; wasserlösliche Cellulosederivate, wie Hydroxypropylcellulose, Hydroxypropylmethylcellulose, Methylcellulose und Hydroxyethylcellulose; Acrylat- und Methacrylat-Copolymere; Polyvinylalkohole; Polyethylenglykole und Polyethylenoxid-Polypropylenoxid-Blockpolymere. Schmelzen aus solchen Polymermischungen können z.B. zu Granulaten, Pulvern oder Folien, die direkt zur Verpackung von Agrochemikalien eingesetzt werden können, verarbeitet werden.

Beim Einsatz als Matrixbildner für agrochemische Zubereitungen in Granulatform werden die erfindungsgemäß zu verwendenden Pfropfpolymerisate bevorzugt mit polymeren Bindemitteln und mineralischen Füllstoffen kombiniert.

Als polymere Bindemittel sind hierfür z.B. geeignet: Polyolefine, wie Polyethylen, Polypropylen, Polybutylen und Polyisobutylen; Vinylpolymerisate, wie Polyvinylchlorid, Polyvinylacetat und Polystyrol; Polyacrylnitril; Poly(meth) acrylate, Polyacetale, wie Polyoxymethylen; Polyester, wie Polyhydroxybuttersäure, Polyhydroxyvaleriansäure, Polyalkylenterephthalate und Polyalkylenadipatterephthalate, z.B. Polybutylenadipatterephthalate; Polyesteramide; Polyetheramide; Polyamide; Polyimide; Polyether; Polyetherketone; Polyurethane, Polycarbonate; Copolymere von Ethylen/ Vinylacetat, Ethylen/(Meth)Acrylaten, Styrol/Acrylnitril, Styrol/Butadien, Styrol/Butadien/Acrylnitril und Olefin/Maleinsäureanhydrid. Bevorzugt sind dabei Polyolefine, wie Polyethylen und Polypropylen, und Polyester. Besonders bevorzugt sind biologisch abbaubare Polybutylenadipatterephthalate, wie sie in der DE-A-44 40 858 beschrieben sind (Ecoflex®, BASF).

Als mineralische Füllstoffe kommen Substanzen in Betracht, die aufgrund ihrer Dichte die Sedimentation der Granulate in wäßrigem Medium verbessern bzw. ermöglichen, die sich in hohen Anteilen in die Polymere einarbeiten lassen, nicht zu hart sind, d.h. im Extruder gut zu verarbeiten sind, chemisch indifferent sind, die Temperaturformstabilität der Zubereitung erhöhen, selbst thermisch stabil sind, die Granulierbarkeit der Schmelze verbessern und die Freisetzung des Wirkstoffs ermöglichen, ökologisch unbedenklich und zudem möglichst preiswert sind.

Beispiele für geeignete mineralische Füllstoffe sind: Oxide, Hydroxide, Silikate, Carbonate und Sulfate von Calcium, Magnesium, Aluminium und Titan und deren Mischungen. Im einzelnen seien beispielsweise Kalk, Kreide, Gips, Bentonit, Kaolin, Wollastonit, Talkum, Phlogopit und Tonmineralien allgemein genannt. Dabei sind Kalk, Gips und Talkum bevorzugt.

Die erfindungsgemäßen agrochemischen Zubereitungen in Granulatform enthalten in der Regel 1 bis 70 Gew.-%, bevorzugt 5 bis 60 Gew.-% und besonders bevorzugt 10 bis 50 Gew.-%, bezogen auf die Zubereitung, der erfindungsgemäßen Pfropfpolymerisate.

Der Gehalt der Zubereitungen an polymeren Bindemittel beträgt im allgemeinen 0 bis 95 Gew.-%, bevorzugt 10 bis 70 Gew.-% und besonders bevorzugt 20 bis 60 Gew.-%.

Die mineralischen Füllstoffe sind üblicherweise in Mengen von 10 bis 80 Gew.-%, bevorzugt 10 bis 70 Gew.-% und besonders bevorzugt 10 bis 60 Gew.-%, ebenfalls bezogen auf die Gesamtzubereitung, enthalten.

Weiterhin können die erfindungsgemäßen Zubereitungen in Granulatform noch oberflächenaktive Additive

enthalten, deren Anteil in der Regel nicht mehr als 20 Gew.-%, bevorzugt nicht mehr als 10 Gew.-% und besonders bevorzugt nicht mehr als 5 Gew.-% der Zubereitung betragen sollte.

Der Gehalt an agrochemischem Wirkstoff liegt im allgemeinen bei 0,1 bis 80 Gew.-%, bevorzugt bei 0,5 bis 40 Gew.-% und besonders bevorzugt bei 1 bis 20 Gew.-%.

Durch Variation der Zusammensetzung der erfindungsgemäßen Zubereitungen kann die Freisetzung des agrochemischen Wirkstoffs gezielt gesteuert werden. Je höher der Anteil an erfindungsgemäß zu verwendendem Pfropfpolymerisat und/oder je höher der Anteil an mineralischem Füllstoff ist, umso schneller wird der Wirkstoff freigesetzt.

Zur Herstellung der erfindungsgemäßen Zubereitungen in Granulatform können alle Komponenten entweder direkt in Form einer physikalischen Mischung miteinander verschmolzen oder mit der bereits vorliegenden Polymerschmelze gemischt werden. Im allgemeinen ist es üblich, eine physikalische Mischung aus Wirkstoff, Füllstoff, Pfropfpolymerisat, Bindemittel und gewünschtenfalls Additiv gemeinsam im freien Zulauf, z.B. über eine Differentialdosierwaage in einen Kneter oder einen Extruder, vorzugsweise einen Ein- oder Doppelschneckenextruder, zu dosieren und dort bei etwa 50 bis 200°C zu verschmelzen. Die Formgebung der austretenden Schmelze kann durch Stranggranulation der ganz oder teilweise abgekühlten Stränge, durch Heißabschlag der Schmelze am Extruderkopf mit einem Messerwalzengranulator, durch Unterwassergranulation direkt beim Austritt der Schmelze aus der Düse oder durch eine andere in der Kunststofftechnik übliche Methode realisiert werden. Durch anschließenden Spritzguß ist eine Weiterverarbeitung zu Formkörpern möglich. Schließlich können die Zubereitungen auch durch Verpressen der Komponenten erhalten werden.

Folien aus den erfindungsgemäß zu verwendenden Pfropfpolymerisaten können nach herkömmlichen Methoden, z.B. durch Extrudieren oder durch Gießen hergestellt werden. Die Dicke der Folien beträgt üblicherweise 10 bis 1000 $\mu$m, bevorzugt 30 bis 500 $\mu$m und besonders bevorzugt 40 bis 100 $\mu$m. Aus den Folien können verschweißbare, versiegelbare oder zuklebbare Beutel oder Säckchen für die Verpackung der agrochemischen Wirkstoffformulierungen hergestellt werden, diese können jedoch auch direkt in Folienstücken geeigneter Größe verschweißt werden. Bei Kontakt mit Wasser zerfällt die Folie unter Freisetzung des Wirkstoffs.

In den erfindungsgemäßen Zubereitungen enthaltene Agrochemikalien können Saatgut, Düngemittel und Pflanzenschutzmittel, insbesondere herbizide, fungizide, insektizide, acarizide und wachstumsregulatorische Mittel, sein.

Im folgenden seien beispielhaft folgende Pflanzenschutzmittel genannt:

- Herbizide:

  1,3,4-Thiadiazole, wie Buthidazole, Cyprazole;

  Amide, wie Allidochlor (CDAA), Benzoylpropethyl, Bromobutide, Chlorthiamid, Dimepiperate, Dimethenamid, Diphenamid, Etobenzanid (Benzchlomet), Flamprop-methyl, Fosamin, Isoxaben, Monalide;

  Naptalame, wie Pronamid (Propyzamid), Propanil;

  Aminophosphorsäuren, wie Bilanafos, (Bialaphos), Buminafos, Glufosinate-ammonium, Glyphosate, Sulfosate;

  Aminotriazole, wie Amitrol;

  Anilide, wie Anilofos, Mefenacet;

  Aryloxyalkansäuren, wie 2,4-D, 2,4-DB, Clomeprop, Dichlorprop, Dichlorprop-P, Dichlorprop-P (2,4-DP-P), Fenoprop (2,4,5-TP), Fluoroxypyr, MCPA, MCPB, Mecoprop, Mecoprop-P, Napropamide, Napropanilide, Triclopyr;

  Benzoesäuren, wie Chloramben, Dicamba;

  Benzothiadiazinone, wie Bentazon;

  Bleacher, wie Clomazone (Dimethazone), Diflufenican, Fluorochloridone, Flupoxam, Fluridone, Pyrazolate, Sulcotrione (Chlormesulone);

  Carbamate, wie Asulam, Barban, Butylate, Carbetamid, Chlorbufam, Chlorpropham, Cycloate, Desmedipham, Diallate, EPTC, Esprocarb, Molinate, Orbencarb, Pebulate, Phenisopham, Phenmedipham, Propham, Prosulfocarb, Pyributicarb, Sulfallate (CDEC), Terbucarb, Thiobencarb (Benthiocarb), Thiocarbazil, Triallate, Vernolate;

Chinolincarbonsäuren, wie Quinclorac, Quinmerac;

Chloracetanilide, wie Acetochlor, Alachlor, Butachlor, Butenachlor, Diethatyl-ethyl, Dimethachlor, Metazachlor, Metolachlor, Pretilachlor, Propachlor, Prynachlor, Terbuchlor, Thenylchlor, Xylachlor;

Cyclohexenone, wie Alloxydim, Caloxydim, Clethodim, Cloproxydim, Cycloxydim, Sethoxydim, Tralkoxydim, 2-{1-[2-(4-Chlorphenoxy)propyloxyimino]butyl}-3-hydroxy-5-(2H-tetrahydrothiopyran-3-yl)-2-cyclohexen-1-on;

Dichlorpropionsäuren, wie Dalapon;

Dihydrobenzofurane, wie Ethofumesate;

Dihydrofuran-3-one, wie Flurtamone;

Dinitroaniline, wie Benefin, Butralin, Dinitramin, Ethalfluralin, Fluchloralin, Isopropalin, Nitralin, Oryzalin, Pendimethalin, Prodiamine, Profluralin, Trifluralin;

Dinitrophenole, wie Bromofenoxim, Dinoseb, Dinoseb-acetat, Dinoterb, DNOC;

Diphenylether, wie Acifluorfen-sodium, Aclonifen, Bifenox, Chlornitrofen (CNP), Difenoxuron, Ethoxyfen, Fluorodifen, Fluoroglycofen-ethyl, Fomesafen, Furyloxyfen, Lactofen, Nitrofen, Nitrofluorfen, Oxyfluorfen;

Dipyridyle, wie Cyperquat, Difenzoquat-methylsulfat, Diquat, Paraquatdichlorid;

Harnstoffe, wie Benzthiazuron, Buturon, Chlorbromuron, Chloroxuron, Chlortoluron, Cumyluron, Dibenzyluron, Cycluron, Dimefuron, Diuron, Dymron, Ethidimuron, Fenuron, Fluormeturon, Isoproturon, Isouron, Karbutilat, Linuron, Methabenzthiazuron, Metobenzuron, Metoxuron, Monolinuron, Monuron, Neburon, Siduron, Tebuthiuron, Trimeturon;

Imidazole, wie Isocarbamid;

Imidazolinone, wie Imazamethapyr, Imazapyr, Imazaquin, Imazethabenz-methyl (Imazame), Imazethapyr;

Oxadiazole, wie Methazole, Oxadiargyl, Oxadiazon;

Oxirane, wie Tridiphane;

Phenole, wie Bromoxynil, Ioxynil;

Phenoxyphenoxypropionsäureester, wie Clodinafop, Cyhalofop-butyl, Ciclöfop-methyl, Fenoxaprop-ethyl, Fenoxaprop-p-ethyl, Fenthiapropethyl, Fluazifop-butyl, Fluazifop-p-butyl, Haloxyfop-ethoxyethyl, Haloxyfop-methyl, Haloxyfop-p-methyl, Isoxapyrifop, Propaquizafop, Quizalofop-ethyl, Quizalofop-p-ethyl, Quizalofop-tefuryl;

Phenylessigsäuren, wie Chlorfenac (Fenac);

Phenylpropionsäuren, wie Chlorfenprop-methyl;

Protoporphyrinogen-IX-Oxydase-Hemmer, wie Benzofenap, Cinidonethyl, Flumiclorac-pentyl, Flumioxazin, Flumipropyn, Flupropaci, Fluthiacet-methyl, Pyrazoxyfen, Sulfentrazone, Thidiazimin;

Pyrazole, wie Nipyraclofen;

Pyridazine, wie Chloridazon, Maleic hydrazide, Norflurazon, Pyridate;

Pyridincarbonsäuren, wie Clopyralid, Dithiopyr, Picloram, Thiazopyr;

Pyrimidylether, wie Pyrithiobacsäure, Pyrithiobac-sodium, KIH-2023, KIH-6127;

Sulfonamide, wie Flumetsulam, Metosulam;

Sulfonylharnstoffe, wie Amidosulfuron, Azimsulfuron, Bensulfuronmethyl, Chlorimuron-ethyl, Chlorsulfuron, Cinosulfuron, Cyclosulfamuron, Ethametsulfuron methyl, Ethoxysulfuron, Flazasulfuron, Halosulfuron-methyl, Imazosulfuron, Metsulfuron-methyl, Nicosulfuron, Primisulfuron, Prosulfuron, Pyrazosulfuron-ethyl, Rimsulfuron, Sulfometuron-methyl, Thifensulfuron-methyl, Triasulfuron, Tribenuron-methyl, Triflusulfuron-methyl;

Triazine, wie Ametryn, Atrazin, Aziprotryn, Cyanazine, Cyprazine, Desmetryn, Dimethamethryn, Dipropetryn, Eglinazin-ethyl, Hexazinon, Procyazine, Prometon, Prometryn, Propazin, Secbumeton, Simazin, Simetryn, Terbumeton, Terbutryn, Terbutylazin, Trietazin;

Triazinone, wie Ethiozin, Metamitron, Metribuzin;

Triazolcarboxamide, wie Triazofenamid;

Uracile, wie Bromacil, Lenacil, Terbacil;

Benazolin, Benfuresate, Bensulide, Benzofluor, Butamifos, Cafenstrole, Chlorthal-dimethyl (DCPA), Cinmethylin, Dichlobenil, Endothall, Fluorbentranil, Mefluidide, Perfluidone, Piperophos;

- Wachstumsregulatoren:

1-Naphthylacetamid, 1-Naphthylessigsäure, 2-Naphthyloxyessigsäure, 3-CPA, 4-CPA, Ancymidol, Anthrachinon, BAP, Butifos; Tribufos, Butralin, Chlorflurenol, Chlormequat, Clofencet, Cyclanilide, Daminozide, Dicamba, Dikegulac sodium, Dimethipin, Chlorfenethol, Etacelasil, Ethephon, Ethychlozate, Fenoprop, 2,4,5-TP, Fluoridamid, Flurprimidol, Flutriafol, Gibberellic acid, Gibberillin, Guazatin, Imazalil, Indolbuttersäure, Indolessigsäure, Karetazan, Kinetin, Lactidichlor-ethyl, Maleic hydrazide, Mefluidide, Mepiquat-chlorid, Naptalam, Paclobutrazole, Prohexadione calcium, Quinmerac, Sintofen, Tetcyclacis, Thidiazuron, Triiodobenzoicacid, Triapenthenol, Triazethan, Tribufos, Trinexapacethyl, Uniconazole;

- Fungizide:

Schwefel, Dithiocarbamate und deren Derivate, wie Ferridimethyldithiocarbamat, Zinkdimethyldithiocarbamat, Zinkethylenbisdithiocarbamat, Manganethylenbisdithiocarbamat, Mangan-Zink-ethylendiamin-bis-dithiocarbamat, Tetramethylthiuramdisulfide, Ammoniak-Komplex von Zink-(N,N-ethylen-bis-dithiocarbamat), Ammoniak-Komplex von Zink-(N,N'-propylen-bis-dithiocarbamat), Zink-(N,N'-propylenbis-dithiocarbamat), N,N'-Polypropylen-bis-(thiocarbamoyl)disulfid;

Nitroderivate, wie Dinitro-(1-methylheptyl)-phenylcrotonat, 2-sec-Butyl-4,6-dinitrophenyl-3,3-dimethylacrylat, 2-sec-Butyl-4,6-dinitrophenyl-isopropylcarbonat, 5-Nitro-isophthalsäure-di-isopropylester;

heterocyclische Substanzen, wie 2-Heptadecyl-2-imidazolin-acetat, 2,4-Dichlor-6-(o-chloranilino)-s-triazin, O, O-Diethyl-phthalimidophosphonothioat, 5-Amino-1-[bis-(dimethylamino)- phosphinyl]-3-phenyl-1,2,4-triazol, 2,3-Dicyano-1,4-dithioanthrachinon, 2-Thio-1,3-dithiolo[4,5-b]chinoxalin, 1-(Butylcarbamoyl)-2-benzimidazolcarbaminsäuremethylester, 2-Methoxycarbonylamino-benzimidazol, 2-(Furyl-(2))-benzimidazol, 2-(Thiazolyl-(4))-benzimidazol, N-(1,1,2,2-Tetrachlorethylthio)-tetrahydrophthalimid, N-Trichlormethylthio-tetrahydrophthalimid, N-Trichlormethylthiophthalimid, N-Dichlorfluormethylthio-N',N'-dimethyl-N-phenylschwefelsäure-diamid, 5-Ethoxy-3-trichlormethyl-1,2,3-thiadiazol, 2-Rhodanmethylthiobenzthiazol, 1,4-Dichlor-2,5-dimethoxybenzol, 4-(2-Chlorphenylhydrazono)-3-methyl-5-isoxazolon, Pyridin-2-thio-1-oxid, 8-Hydroxychinolin bzw. dessen Kupfersalz, 2,3-Dihydro-5-carboxanilido-6-methyl-1,4-oxathiin, 2,3-Dihydro-5-carboxanilido-6-methyl-1,4-oxathiin-4,4-dioxid, 2-Methyl-5,6-dihydro-4H-pyran-3-carbonsäure-anilid, 2-Methyl-furan-3-carbonsäureanilid, 2,5-Dimethyl-furan-3-carbonsäureanilid, 2,4,5-Trimethyl-furan-3-carbonsäureanilid, 2,5-Dimethyl-furan-3-carbonsäurecyclohexylamid, N-Cyclohexyl-N-methoxy-2,5-dimethyl-furan-3-carbonsäureamid, 2-Methyl-benzoesäure-anilid, 2-Iod-benzoesäure-anilid, N-Formyl-N-morpholin-2,2,2-trichlorethylacetal, Piperazin-1,4-diylbis-1-(2,2,2-trichlorethyl)-formamid, 1-(3,4-Dichloranilino)-1-formylamino-2,2,2-trichlorethan, 2,6-Dimethyl-N-tridecyl-morpholin bzw. dessen Salze, 2,6-Dimethyl-N-cyclododecyl-morpholin bzw. dessen Salze, N-[1-(p-tert.-Butylphenyl)-2-methylpropyl]-cis-2,6-dimethyl-morpholin, N-[3-(p-tert.-Butylphenyl)-2-methylpropyl]-piperidin, 1-[2-(2,4-Dichlorphenyl)-4-ethyl-1,3-dioxolan-2-yl-ethyl]-1H-1,2,4-triazol, 1-[2-(2,9-Dichlorphenyl)-4-n-propyl-1,3-dioxolan-2-yl-ethyl]-1H-1,2,4-triazol, N-(n-Propyl)-N-(2,4,6-trichlorphenoxyethyl)-N'-imidazol-yl-harnstoff, 1-(4-Chlorphenoxy)-3,3-dimethyl-1-(1H-1,2,4-triazol-1-yl)-2-butanon, 1-(4-Chlorphenoxy)-3,3-dimethyl-1-(1H-1,2,4-triazol-1-yl)-2-butanol, (2RS,3RS)-1-[3-(2-Chlorphenyl)-2-(4-fluorphenyl)-oxiran-2-yl-methyl]-1H-1,2,4-triazol, α-(2-Chlorphenyl)-α-(4-chlorphenyl)-5-pyrimidin-methanol, 5-Butyl-2-dimethylamino-4-hydroxy-6-methyl-pyrimidin, Bis-(p-chlorphenyl)-3-pyridinmethanol, 1,2-Bis-(3-ethoxycarbonyl-2-thioureido)-benzol, 1,2-Bis-(3-methoxycarbonyl-2-thioureido)-benzol;

Anilinopyrimidine, wie N-(4,6-Dimethylpyrimidin-2-yl)-anilin, N-[4-Methyl-6-(1-propinyl)-pyrimidin-2-yl]-anilin, N-[4-Methyl-6-cyclopropyl-pyrimidin-2-yl]-anilin;

Phenylpyrrole, wie 4-(2,2-Difluor-1,3-benzodioxol-4-yl)-pyrrol-3-carbonitril;

Zimtsäureamide, wie 3-(4-Chlorphenyl)-3-(3,4-dimethoxyphenyl)-acrylsäuremorpholid;

Dodecylguanidinacetat, 3-[3-(3,5-Dimethyl-2-oxycyclohexyl)-2-hydroxyethyl]-glutarimid, Hexachlorbenzol, DL-Methyl-N-(2,6-dimethyl-phenyl)-N-furoyl(2)-alaninat, DL-N-(2,6-Dimethyl-phenyl)-N-(2'-methoxyacetyl)-alanin-methyl- ester, N-(2,6-Dimethylphenyl)-N-chloracetyl-D,L-2-aminobutyrolacton, DL-N-(2,6-Dimethylphenyl)-N-(phenylacetyl)-alaninmethylester, 5-Methyl-5-vinyl-3-(3,5-dichlorphenyl)-2,4-dioxo-1,3-oxazolidin, 3-[3,5-Dichlorphenyl(-5-methyl- 5-methoxymethyl]-1,3-oxazolidin-2,4-dion, 3-(3,5-Dichlorphenyl)-1-isopropylcarbamoylhydantoin, N-(3,5-Dichlorphenyl)-1,2-dimethylcyclopropan-1,2-dicarbonsäureimid, 2-Cyano-[N-(ethylaminocarbonyl)-2-methoximino]-acetamid, 1-[2-(2,4-Dichlorphenyl)-pentyl]-1H-1,2,4-triazol, 2,4-Difluor-a-(1H-1,2,4-triazolyl-1-methyl)-benzhydrylalkohol, N-(3-Chlor-2,6-dinitro-4-trifluormethyl-phenyl)-5-trifluormethyl-3-chlor-2-aminopyridin, 1-((bis-(4-Fluorphenyl)-methylsilyl)-methyl)-1H-1,2,4-triazol;

Strobilurine der allgemeinen Formel II

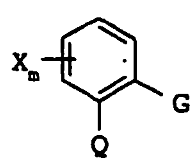

II

in der die Variablen folgende Bedeutung haben:

X Halogen, $C_1$-$C_4$-Alkyl oder Trifluormethyl;

m 0 oder 1;

Q $C(=CH-CH_3)-COOCH_3$, $C(=CH-OCH_3)-COOCH_3$, $C(=N-OCH_3)-CONHCH_3$, $C(=N-OCH_3)-COOCH_3$ oder $N(-OCH_3)-COOCH_3$;

G $-O-L$, $-CH_2O-L$, $-OCH_2-L$, $-CH=CH-L$, $-C{\equiv}C-L$, $-CH_2O-N=C(R^{11})-L$ oder $-CH_2O-N=C(R^{11})-C(R^{12})=N-OR^{13}$;

B Phenyl, Naphthyl, 5-gliedriges oder 6-gliedriges Hetaryl oder 5-gliedriges oder 6-gliedriges Heterocyclyl, enthaltend ein bis drei N-Atome und/oder ein O- oder S-Atom oder ein oder zwei O- und/oder S-Atome, wobei die Ringsysteme unsubstituiert oder substituiert sind durch einen bis drei Reste $R^a$;

$R^a$ Cyano, Nitro, Amino, Aminocarbonyl, Aminothiocarbonyl, Halogen, $C_1$-$C_6$-Alkyl, $C_1$-$C_6$-Halogenalkyl, $C_1$-$C_6$-Alkylcarbonyl, $C_1$-$C_6$-Alkylsulfonyl, $C_1$-$C_6$-Alkylsulfoxyl, $C_3$-$C_6$-Cycloalkyl, $C_1$-$C_6$-Alkoxy, $C_1$-$C_6$-Halogenalkoxy, $C_1$-$C_6$-Alkyloxycarbonyl, $C_1$-$C_6$-Alkylthio, $C_1$-$C_6$-Alkylamino, Di-$C_1$-$C_6$-Alkylamino, $C_1$-$C_6$-Alkylaminocarbonyl, Di-$C_1$-$C_6$-Alkylaminocarbonyl, $C_1$-$C_6$-Alkylaminothiocarbonyl, Di-$C_1$-$C_6$-Alkylaminothiocarbonyl, $C_2$-$C_6$-Alkenyl, $C_2$-$C_6$-Alkenyloxy, Phenyl, Phenoxy, Benzyl, Benzyloxy, 5- oder 6-gliedriges Heterocyclyl, 5- oder 6-gliedriges Hetaryl, 5- oder 6-gliedriges Hetaryloxy, $C(=NOR^{\alpha})-OR^{\beta}$ oder $OC(R^{\alpha})_2-C(R^{\beta})=NOR^{\beta}$
wobei die cyclischen Reste ihrerseits unsubstituiert oder substituiert sind durch einen bis drei Reste $R^b$;

$R^b$ Cyano, Nitro, Halogen, Amino, Aminocarbonyl, Aminothiocarbonyl, $C_1$-$C_6$-Alkyl, $C_1$-$C_6$-Halogenalkyl, $C_1$-$C_6$-Alkylsulfonyl, $C_1$-$C_6$-Alkylsulfoxyl, $C_3$-$C_6$-Cycloalkyl, $C_1$-$C_6$-Alkoxy, $C_1$-$C_6$-Halogenalkoxy, $C_1$-$C_6$-Alkoxycarbonyl, $C_1$-$C_6$-Alkylthio, $C_1$-$C_6$-Alkylamino, Di-$C_1$-$C_6$-alkylamino, $C_1$-$C_6$-Alkylaminocarbonyl, Di-$C_1$-$C_6$-alkylaminocarbonyl, $C_1$-$C_6$-Alkylaminothiocarbonyl, Di-$C_1$-$C_6$-alkylaminothiocarbonyl, $C_2$-$C_6$-Alkenyl, $C_2$-$C_6$-Alkenyloxy, $C_3$-$C_6$-Cycloalkyl, $C_3$-$C_6$-Cycloalkenyl, Phenyl, Phenoxy, Phenylthio, Benzyl, Benzyloxy, 5- oder 6-gliedriges Heterocyclyl, 5- oder 6-gliedriges Hetaryl, 5-oder 6-gliedriges Hetaryloxy oder C(=NOR$^\alpha$)-OR$^\beta$;

$R^\alpha$, $R^\beta$ Wasserstoff oder $C_1$-$C_6$-Alkyl;

$R^{11}$ Wasserstoff, Cyano, $C_1$-$C_4$-Alkyl, $C_1$-$C_4$-Halogenalkyl, $C_3$-$C_6$-Cycloalkyl, $C_1$-$C_4$-Alkoxy;

$R^{12}$ Phenyl, Phenylcarbonyl, Phenylsulfonyl, 5- oder 6-gliedriges Hetaryl, 5- oder 6-gliedriges Hetarylcarbonyl oder 5- oder 6-gliedriges Hetarylsulfonyl, wobei die Ringsysteme unsubstituiert oder substituiert sind durch ein bis drei Reste $R^a$,
$C_1$-$C_{10}$-Alkyl, $C_3$-$C_6$-Cycloalkyl, $C_2$-$C_{10}$-Alkenyl, $C_2$-$C_{10}$-Alkinyl, $C_1$-$C_{10}$-Alkylcarbonyl, $C_2$-$C_{10}$-Alkenylcarbonyl, $C_3$-$C_{10}$-Alkinylcarbonyl, $C_1$-$C_{10}$-Alkylsulfonyl, oder C(=NOR$^\alpha$)-R$^\beta$,
wobei die Kohlenwasserstoffreste dieser Gruppen unsubstituiert oder substituiert sind durch einen bis drei Reste $R^c$;

$R^c$ Cyano, Nitro, Amino, Aminocarbonyl, Aminothiocarbonyl, Halogen, $C_1$-$C_6$-Alkyl, $C_1$-$C_6$-Halogenalkyl, $C_1$-$C_6$-Alkylsulfonyl, $C_1$-$C_6$-Alkylsulfoxyl, $C_1$-$C_6$-Alkoxy, $C_1$-$C_6$-Halogenalkoxy, $C_1$-$C_6$-Alkoxycarbonyl, $C_1$-$C_6$-Alkylthio, $C_1$-$C_6$-Alkylamino, Di-$C_1$-$C_6$-alkylamino, $C_1$-$C_6$-Alkylaminocarbonyl, Di-$C_1$-$C_6$-alkylaminocarbonyl, $C_1$-$C_6$-Alkylaminothiocarbonyl, Di-$C_1$-$C_6$-alkylaminothiocarbonyl, $C_2$-$C_6$-Alkenyl, $C_2$-$C_6$-Alkenyloxy, $C_3$-$C_6$-Cycloalkyl, $C_3$-$C_6$-Cycloalkyloxy, 5- oder 6-gliedriges Heterocyclyl, 5- oder 6-gliedriges Heterocyclyloxy, Benzyl, Benzyloxy, Phenyl, Phenoxy, Phenylthio, 5- oder 6-gliedriges Hetaryl, 5- oder 6-gliedriges Hetaryloxy und Hetarylthio, wobei die cyclischen Gruppen ihrerseits partiell oder vollständig halogeniert sein können oder einen bis drei Reste $R^a$ tragen können;

$R^{13}$ Wasserstoff,
$C_1$-$C_6$-Alkyl, $C_2$-$C_6$-Alkenyl, $C_2$-$C_6$-Alkinyl, wobei die Kohlenwasserstoffreste dieser Gruppen unsubstituiert oder substituiert sind durch einen bis drei Reste $R^c$.

Beispielhaft seien im einzelnen folgende Strobilurine aufgeführt:

Tabelle I

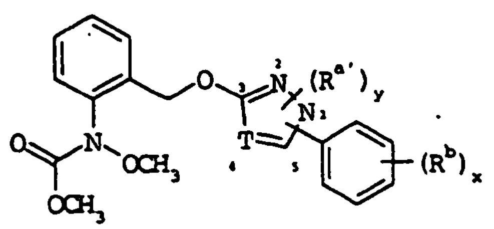

III

| Nr. | T | $(R^{a'})_y$ | Position der Gruppe Phenyl-$(R^b)_x$ | $(R^b)_x$ | Literatur |
|---|---|---|---|---|---|
| I-1 | N | - | 1 | 2,4-$Cl_2$ | WO-A 96/01256 |
| I-2 | N | - | 1 | 4-Cl | WO-A 96/01256 |
| I-3 | CH | - | 1 | 2-Cl | WO-A 96/01256 |
| I-4 | CH | - | 1 | 3-Cl | WO-A 96/01256 |
| I-5 | CH | - | 1 | 4-Cl | WO-A 96/01256 |

(fortgesetzt)

| Nr. | T | $(R^{a'})_y$ | Position der Gruppe Phenyl-$(R^b)_x$ | $(R^b)_x$ | Literatur |
|---|---|---|---|---|---|
| I-6 | CH | - | 1 | $4\text{-}CH_3$ | WO-A 96/01256 |
| I-7 | CH | - | 1 | H | WO-A 96/01256 |
| I-8 | CH | - | 1 | $3\text{-}CH_3$ | WO-A 96/01256 |
| I-9 | CH | $5\text{-}CH_3$ | 1 | $3\text{-}CF_3$ | WO-A 96/01256 |
| I-10 | CH | $1\text{-}CH_3$ | 5 | $3\text{-}CF_3$ | WO-A 99/33812 |
| I-11 | CH | $1\text{-}CH_3$ | 5 | 4-Cl | WO-A 99/33812 |
| I-12 | CH | $1\text{-}CH_3$ | 5 | - | WO-A 99/33812 |

Tabelle II

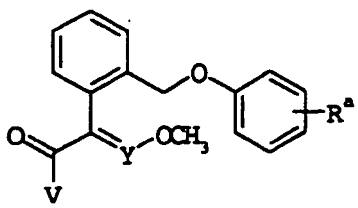

IV

| Nr. | V | Y | $R^a$ | Literatur |
|---|---|---|---|---|
| II-1 | $OCH_3$ | N | $2\text{-}CH_3$ | EP-A 253 213 |
| II-2 | $OCH_3$ | N | $2,5\text{-}(CH_3)_2$ | EP-A 253 213 |
| II-3 | $NHCH_3$ | N | $2,5\text{-}(CH_3)_2$ | EP-A 398 692 |
| II-4 | $NHCH_3$ | N | 2-Cl | EP-A 398 692 |
| II-5 | $NHCH_3$ | N | $2\text{-}CH_3$ | EP-A 398 692 |
| II-6 | $NHCH_3$ | N | $2\text{-}CH_3$, $4\text{-}OCF_3$ | EP-A 628 540 |
| II-7 | $NHCH_3$ | N | 2-Cl, $4\text{-}OCF_3$ | EP-A 628 540 |
| II-8 | $NOCH_3$ | N | $2\text{-}CH_3$, $4\text{-}OCH(CH_3)\text{-}C(CH_3){=}NOCH_3$ | DE-Anm. 10002661.3 |
| II-9 | $NOCH_3$ | N | 2-Cl, $4\text{-}OCH(CH_3)\text{-}C(CH_3){=}NOCH_3$ | DE-Anm. 10002661.3 |
| II-10 | $NHCH_3$ | N | $2\text{-}CH_3$, $4\text{-}OCH(CH_3)\text{-}C(CH_2CH_3){=}NOCH_3$ 10002661.3 | DE-Anm. |
| II-11 | $NHCH_3$ | N | 2-Cl, $4\text{-}OCH(CH_3)\text{-}C(CH_3){=}NOCH_2CH_3$ | DE-Anm. 10002661.3 |

Tabelle III

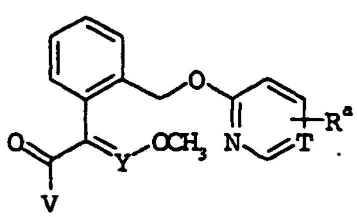

V

(fortgesetzt)

| Nr. | V | Y | T | Rª | Literatur |
|---|---|---|---|---|---|
| III-1 | $OCH_3$ | CH | N | 2-$OCH_3$, 6-$CF_3$ | WO-A 96/16047 |
| III-2 | $OCH_3$ | CH | N | 2-$OCH(CH_3)_2$, 6-$CF_3$ | WO-A 96/16047 |
| III-3 | $OCH_3$ | CH | CH | 5-$CF_3$ | EP-A 278 595 |
| III-4 | $OCH_3$ | CH | CH | 6-$CF_3$ | EP-A 278 595 |
| III-5 | $NHCH_3$ | N | CH | 3-Cl | EP-A 398 692 |
| III-6 | $NHCH_3$ | N | CH | 3-$CF_3$ | EP-A 398 692 |
| III-7 | $NNCH_3$ | N | CH | 3-$CF_3$, 5-Cl | EP-A 398 692 |
| III-8 | $NHCH_3$ | N | CH | 3-Cl, 5-$CF_3$ | EP-A 398 692 |

Tabelle IV

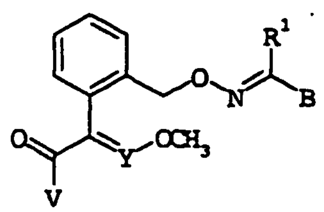

VI

| Nr. | V | Y | R¹ | B | Literatur |
|---|---|---|---|---|---|
| IV-1 | $OCH_3$ | CH | $CH_3$ | $(3-CF_3)C_6H_4$ | EP-A 370 629 |
| IV-2 | $OCH_3$ | CH | $CH_3$ | $(3,5-Cl_2)C_6H_3$ | EP-A 370 629 |
| IV-3 | $NHCH_3$ | N | $CH_3$ | $(3-CF_3)C_6H_4$ | WO-A 92/13830 |
| IV-4 | $NHCH_3$ | N | $CH_3$ | $(3-OCF_3)C_6H_4$ | WO-A 92/13830 |
| IV-5 | $OCH_3$ | N | $CH_3$ | $(3-OCF_3)C_6H_4$ | EP-A 460 575 |
| IV-6 | $OCH_3$ | N | $CH_3$ | $(3-CF_3)C_6H_4$ | EP-A 460 575 |
| IV-7 | $OCH_3$ | N | $CH_3$ | $(3,4-Cl_2)C_6H_3$ | EP-A 460 575 |
| IV-8 | $OCH_3$ | N | $CH_3$ | $(3,5-Cl_2)C_6H_3$ | EP-A 463 488 |

Tabelle V

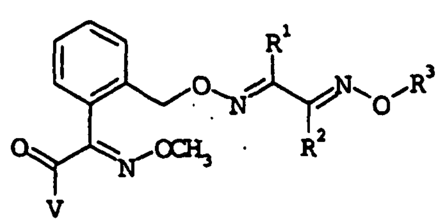

VII

| Nr. | V | R¹ | R² | R³ | Literatur |
|---|---|---|---|---|---|
| V-1 | $OCH_3$ | $CH_3$ | $CH_3$ | $CH_3$ | WO-A 95/18789 |
| V-2 | $OCH_3$ | $CH_3$ | $CH(CH_3)_2$ | $CH_3$ | WO-A 95/18789 |

(fortgesetzt)

| Nr. | V | $R^1$ | $R^2$ | $R^3$ | Literatur |
|---|---|---|---|---|---|
| V-3 | $OCH_3$ | $CH_3$ | $CH_2CH_3$ | $CH_3$ | WO-A 95/18789 |
| V-4 | $NHCH_3$ | $CH_3$ | $CH_3$ | $CH_3$ | WO-A 95/18789 |
| V-5 | $NHCH_3$ | $CH_3$ | $4\text{-F-}C_6H_4$ | $CH_3$ | WO-A 95/18789 |
| V-6 | $NHCH_3$ | $CH_3$ | $4\text{-Cl-}C_6H_4$ | $CH_3$ | WO-A 95/18789 |
| V-7 | $NHCH_3$ | $CH_3$ | $2,4\text{-}C_6H_3$ | $CH_3$ | WO-A 95/18789 |
| V-8 | $NHCH_3$ | Cl | $4\text{-F-}C_6H_4$ | $CH_3$ | WO-A 98/38857 |
| V-9 | $NHCH_3$ | Cl | $4\text{-Cl-}C_6H_4$ | $CH_2CH_3$ | WO-A 98/38857 |
| V-10 | $NHCH_3$ | $CH_3$ | $CH_2C(=CH_2)CH_3$ | $CH_3$ | WO-A 97/05103 |
| V-11 | $NHCH_3$ | $CH_3$ | $CH=C(CH_3)_2$ | $CH_3$ | WO-A 97/05103 |
| V-12 | $NHCH_3$ | $CH_3$ | $CH=C(CH_3)_2$ | $CH_2CH_3$ | WO-A 97/05103 |
| V-13 | $NHCH_3$ | $CH_3$ | $CH=C(CH_3)CH_2CH_3$ | $CH_3$ | WO-A 97/05103 |
| V-14 | $NHCH_3$ | $CH_3$ | $O\text{-}CH(CH_3)_2$ | $CH_3$ | WO-A 97/06133 |
| V-15 | $NHCH_3$ | $CH_3$ | $O\text{-}CH_2CH(CH_3)_2$ | $CH_3$ | WO-A 97/06133 |
| V-16 | $NHCH_3$ | $CH_3$ | $C(CH_3)=NOCH_3$ | $CH_3$ | WO-A 97/15552 |

Tabelle VI

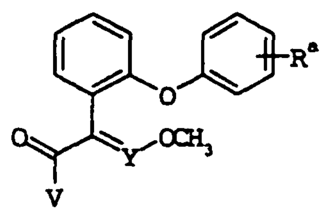

VIII

| Nr. | V | Y | $R^a$ | Literatur |
|---|---|---|---|---|
| VI-1 | $NHCH_3$ | N | H | EP-A 398 692 |
| VI-2 | $NHCH_3$ | N | $3\text{-}CH_3$ | EP-A 398 692 |
| VI-3 | $NHCH_3$ | N | $2\text{-}NO_2$ | EP-A 398 692 |
| VI-4 | $NHCH_3$ | N | $4\text{-}NO_2$ | EP-A 398 692 |
| VI-5 | $NHCH_3$ | N | 4-Cl | EP-A 398 692 |
| VI-6 | $NHCH_3$ | N | 4-Br | EP-A 398 692 |

Tabelle VII

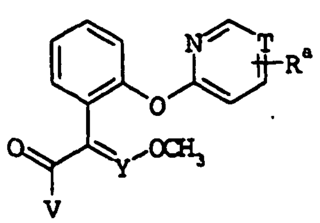

IX

(fortgesetzt)

| Nr. | V | Y | T | $R^a$ | Literatur |
|---|---|---|---|---|---|
| VII-1 | $OCH_3$ | CH | N | 6-O-(2-CN-$C_6H_4$) | EP-A 382 375 |
| VII-2 | $OCH_3$ | CH | N | 6-O-(2-Cl-$C_6H_4$) | EP-A 382 375 |
| VII-3 | $OCH_3$ | CH | N | 6-O-(2-$CH_3$-$C_6H_4$) | EP-A 382 375 |
| VII-4 | $NHCH_3$ | N | N | 6-O-(2-Cl-$C_6H_4$) | GB-A 2253624 |
| VII-5 | $NHCH_3$ | N | N | 6-O-(2,4-$Cl_2$-$C_6H_3$) | GB-A 2253624 |
| VII-6 | $NHCH_3$ | N | N | 6-O-(2-$CH_3$-$C_6H_4$) | GB-A 2253624 |
| VII-7 | $NHCH_3$ | N | N | 6-O-(2-$CH_3$,3-Cl-$C_6H_3$) | GB-A 2253624 |
| VII-8 | $NHCH_3$ | N | N | 2-F, 6-O-(2-$CH_3$-$C_6H_4$) | WO-A 98/21189 |
| VII-9 | $NHCH_3$ | N | N | 2-F, 6-O-(2-Cl-$C_6H_4$) | WO-A 98/21189 |
| VII-10 | $NHCH_3$ | N | N | 2-F, 6-O-(2-$CH_3$,3-Cl-$C_6H_3$) | WO-A 98/21189 |

Als besonders bevorzugte Beispiele seien Methyl-E-methoxyimino-[α-(o-tolyloxy)-o-tolyl]acetat, Methyl-E-2-{2-[6-(2-cyanophenoxy)-pyrimidin-4-yloxy]-phenyl}-3-methoxyacrylat, Methyl-E-methoxyimino-[α-(2-phenoxyphenyl)]-acetamid, Methyl-E-methoxyimino-[α-(2,5-dimethylphenoxy)-o-tolyl]-acetamid, Methyl-N-[[[1- (4-chlorphenyl)pyrazol-3-yl]oxy]-o-tolyl]-N-methoxycarbamat und 2-(Methoxyimino)-2-{2-[(3E,6E)-5-(methoxyimino)-4,6-dimethyl-2,8-dioxa-3,7-diazanona-3,6-dien-1-yl]phenyl}-N-methylacetamid genannt.

Die Strobilurine können zusammen mit weiteren Wirkstoffen gegen Schädlinge (z.B. Insekten, Spinnentiere oder Nematoden) und/oder Schadpilze, mit herbiziden und/oder wachstumsregulierenden Wirkstoffen und/oder Düngemitteln eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Speziell eignen sie sich zur Bekämpfung insbesondere.folgender Pflanzenkrankheiten:

Alternaria-Arten an Gemüse und Obst,
Botrytis cinerea (Grauschimmel) an Erdbeeren, Gemüse, Zierpflanzen und Reben,
Cercospora arachidicola an Erdnüssen,
Erysiphe cichoracearum und Sphaerotheca fuliginea an Kürbisgewächsen,
Erysiphe graminis (echter Mehltau) an Getreide,
Fusarium- und Verticillium-Arten an verschiedenen Pflanzen, Helminthosporium-Arten an Getreide,
Mycosphaerella-Arten an Bananen,
Phytophthora infestans an Kartoffeln und Tomaten,
Plasmopara viticola an Reben,
Podosphaera leucotricha an Äpfeln;
Pseudocercosporella herpotrichoides an Weizen und Gerste,
Pseudocercosporella-Arten an Hopfen und Gurken,
Pseudoperonospora-Arten an Hopfen und Gurken,
Puccinia-Arten an Getreide,
Pyricularia oryzae an Reis,
Rhizoctonia-Arten an Baumwolle, Reis und Rasen,
Septoria nodorum an Weizen,
Uncinula necator an Reben,
Ustilago-Arten an Getreide und Zuckerrohr,
Venturia inaequalis (Schorf) an Äpfeln.

Beispiele

Herstellung des Pfropfpolymerisats P1

In einem Polymerisationsgefäß wurden 72 g Polyethylenglykol (mittleres Molekulargewicht 6000, Pluriol® E

6000, BASF) unter Rühren und leichtem Stickstoffstrom auf 80°C erhitzt. Unter weite rem Rühren und Aufrechterhaltung dieser Temperatur wurden 410 g Vinylacetat und parallel dazu eine Lösung vom 1,4 g tert.-Butylperpivalat in 30 g Methanol in 3 h zugetropft. Nach vollständiger Zugabe wurde noch 2 h bei 80°C gerührt.

Nach dem Abkühlen wurde das Pfropfpolymerisat in 450 ml Methanol gelöst. Zur Verseifung wurden bei 30°C 50 ml einer 10 gew.-%igen methanolischen Natriumhydroxidlösung zugegeben. Nach ca. 40 min wurde die Reaktion durch Zugabe von 750 ml 1 gew.-%iger Essigsäure abgebrochen. Zur Entfernung des Methanols wurde die Lösung einer Wasserdampfdestillation unterzogen.

Nach anschließender Gefriertrocknung der klaren Lösung wurde ein weißes Pulver erhalten. Eine 20 gew.-%ige wäßrige Lösung des erhaltenen Pfropfpolymerisats wies eine Viskosität von 124 mPas auf. Das Pfropfpolymerisat hatte einen K-Wert von 54 und eine Reißdehnung von 74%.

Beispiel 1

Verwendung des Pfropfpolymerisats P1 als Matrixbildner für agrochemische Zubereitungen mit kontrollierter Wirkstofffreisetzung

Pfropfpolymerisat P1, Fungizid F1 (Verbindung V-16 aus Tabelle V), Polybutylenadipatterephthalat (Ecoflex®, BASF) als wasserunlösliches polymeres Bindemittel und Calciumcarbonat (Merck) als Füllstoff wurden jeweils in den Tabelle VIII zu entnehmenden Mengenverhältnissen (Angabe in Gew.-%, bezogen auf die Gesamtzubereitung) gemischt und über eine Dosierwaage in die Förderzone (Zone 0) eines dichtkämmenden, gegenläufigen Doppelschneckenextruders (Haake Rheocord 90 mit Mixing-Schnecke und 2 mm-Düse, Fa. Haake) eingebracht und über 10 Temperaturzonen (80, 120, 153, 154, 154, 153, 153, 152, 152, 140°C) bei einem Durchsatz von 1 kg/h und einer Schneckendrehzahl von 200 rpm homogenisiert, plastifiziert und am Extruderkopf über eine 2 mm-Düse auf ein Metallförderband ausgetragen. Der Strang wurde dann über eine Luftrinne und eine Förderwalze (Haake TP1) in einen Stranggranulator mit 1,1 mm Durchmesser (SGS 100/E, C.F. Scheer & CIE) eingetragen und bei -24°C zu einem zylindrischen Granulat mit einem durchschnittlichen Querschnitt von 1,0 - 1,2 mm konfektioniert.

Tabelle VIII

| Zubereitung | P1 | Ecoflex® | F1 | $CaCO_3$ |
|---|---|---|---|---|
| A | 4,98 | 37,89 | 7,0 | 49,83 |
| B | 9,97 | 32,89 | 7,0 | 49,83 |
| C | 14,95 | 27,90 | 7,0 | 49,83 |
| D | 19,93 | 22,92 | 7,0 | 49,83 |
| E | 42,83 | - | 7,0 | 49,83 |

Zur Bestimmung der Wirkstofffreisetzung wurde jeweils 1 g Granulat der obigen Zubereitungen in einem 1 1-Meßkolben mit 1 1 Trinkwasser überschichtet. Der Meßkolben wurde 30 Tage bei 25°C erschütterungsfrei gelagert. Zur Überprüfung der Wirkstofffreisetzung wurden täglich Proben entnommen, wobei der Meßkolben vor der Probennahme um 180° gewendet und der Inhalt durchmischt wurde, um eine homogene Wirkstoffverteilung sicherzustellen. Anschließend wurden die entnommenen Proben im UV/VIS-Spektroskop (HP 8452, Diode Array Spectrophotometer, 1 cm Quarzküvette, Hewlett-Packard) bei 250 nm vermessen und danach in den Kolben zurückgegeben. Von den Wirkstoffen wurden zuvor Eichkurven (Absorption aufgetragen gegen Konzentration) erstellt.

Die Freisetzungsverläufe der Zubereitungen A bis E sind in Abbildung 1 dargestellt. Aufgetragen wurde jeweils die prozentuale Freisetzung (100% entspricht der vollständigen Freisetzung von 50 ppm Wirkstoff bei 1 g 5 gew.-%iger Zubereitung in 1 1 Wasser) gegen die Zeit in Tagen.

Die kumulierte Freisetzung des Wirkstoffs zeigte jeweils einen wurzelfunktionsabhängigen verlauf, wie es für einen Diffusionprozess zu erwarten war (Vt - Gesetz):

$$c = K \sqrt{t}$$

c: Wirkstoffkonzentration; t: Zeit

Zudem zeigte sich eine starke Anhängigkeit der Wirkstofffreisetzung von der Zusammensetzung der Polymermatrix. Durch Variation der Mengen an Pfropfpolymerisat, zusätzlichem polymeren Bindemittel und Füllstoff ist eine gezielte Einstellung der Wirkstofffreisetzung möglich.

Beispiel 2

Verwendung des Pfropfpolymerisats P1 als Matrixbildner und Dispergiermittel für agrochemische Zubereitungen mit wasserunlöslichem Wirkstoff

Pfropfpolymerisat P1, Fungizid F2 (Verbindung I-2 aus Tabelle I, Pyraclostrubin, BASF), Polyvinylpyrrolidon (Luviskol® K30, BASF) als Bindemittel (PVP), Diisobutylnaphthalinsäurenatriumsalz (Wettol® NT1, BASF), Polyethylenoxid/Polypropylenoxid-Blockcopolymer (Pluriol® 8000, BASF) und Dodecylbenzolsulfonsäurenatriumsalz (Aldrich, DBSN) als oberflächenaktive Additive wurden jeweils in den Tabelle IX zu entnehmenden Mengenverhältnissen (Angabe in Gew.-%, bezogen auf die Gesamtzubereitung) gemischt und in einem Zweischneckenmeßkneter Rheomix 600 (Fa. Haake) bei 160˚C extrudiert. Nach dem Abkühlen wurden die Mischungen zu Pulvern mit Korngrößen von 100 - 250 μm gemahlen.

Zur Bestimmung der Dispergierfähigkeit wurde jeweils 1 g der pulverförmigen Zubereitung unter Rühren (Magnetrührwerk Ikamag RET-G, Jahnke & Kunkel) in einen 1 1-Standkolben mit 1 1 Leitungswasser (20˚C) bei einer Rührgeschwindigkeit von 300 U/min eingetragen. Die Auflösung bzw. der Zerfall des Pulvers und damit die Freisetzung des Wirkstoffs wurde optisch verfolgt, in Tabelle IX ist die Zeit bis zur Auflösung angegeben.

Tabelle IX

| Zuber. | P1 | F2 | PVP | Wettol® NT1 | Pluriol® 8000 | DBSN | Auflösung (min) |
|---|---|---|---|---|---|---|---|
| F | 55 | 40 | - | 5 | - | - | 60 |
| G | 55 | 40 | - | - | 5 | - | 60 |
| H | 55 | 40 | - | - | - | 5 | 60 |
| I | 27,5 | 40 | 27,5 | 5 | - | - | 45 |

Beispiel 3

Verwendung des Pfropfpolymerisats 1 zur Herstellung von wasserlöslichen Folienbeuteln für agrochemische Formulierungen

Aus dem Pfropfpolymerisat 1 wurden durch Gießen eine 40 μm dicke Folie (I) und eine 100 μm dicke Folie (II) hergestellt. In jede Folie wurden 20 g einer handelsüblichen Pflanzenschutzmittelformulierung mit Hilfe eines im Haushalt gebräuchlichen Folienschweißgerätes eingeschweißt.

Die so befüllten Folienbeutel (I) und (II) wurden jeweils in ein mit Wasser (20˚C) gefülltes Becherglas gegeben.

Die Zeit bis zur rückstandsfreien Auflösung betrug beim Folienbeutel (I) 20 sec und beim Folienbeutel (II) 60 sec.

Beispiel 4

Verwendung des Pfropfpolymerisats P1 als Beschichtungsmittel für agrochemische Zubereitungen in Tablettenform

Zunächst wurde eine Sprühdispersion der Zusammensetzung

| | | |
|---|---|---|
| 10,0 | Gew.-% | Pfropfpolymerisat P1 |
| 1,5 | Gew.-% | Eisenoxidrot (Sicovit® rot, BASF) |
| 3,0 | Gew.-% | Titandioxid BN 56 (Kronos) |
| 4,5 | Gew.-% | Talkumpulver (Riedel de Haen) |
| 81,0 | Gew.-% | Wasser |

hergestellt, indem das Pfropfpolymerisat P1 in Wasser gelöst und mit Sicovit rot, Titandioxid und Talkum versetzt wurde. Zur Homogenisierung wurde die Dispersion dann in einer Korundscheibenmühle gemahlen.

1260 g (inkl. eines Zuschlags von 10 Gew.-% für Sprühverluste) der so erhaltenen wäßrigen Dispersion wurden dann zur Erzeugung eines Filmüberzugs in einem Horizontaltrommelcoater (Accela-Cota 24", Fa. Manesty) bei einer Lufttemperatur von 60˚C, einer Sprührate von 30 g/min und einem Sprühdruck von 2 bar aus einer 1 mm weiten Sprühdüse auf 5000 g 9 mm dicke, gewölbte Tablettenkerne aus 40 mg des Fungizids F2 (Verbindung I-2.aus Tabelle I, Pyraclostrubin, BASF), 195,0 mg Ludipress® (BASF), 12,5 mg Kollidon® VA 64 (BASF) und 2,5 mg Magnesiumstearat aufgesprüht.

## Patentansprüche

**1.** Verwendung von wasserlöslichen oder wasserdispergierbaren, filmbildenden Pfropfpolymerisaten, die erhältlich sind durch radikalische Polymerisation von

(a) Vinylestern von aliphatischen $C_1$-$C_{24}$-Carbonsäuren in Gegenwart von
(b) Polyethern eines mittleren Molekulargewichts (Zahlenmittel) von mindestens 300 der allgemeinen Formel I

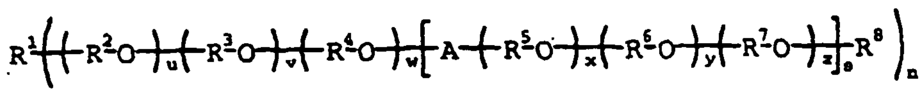

I

in der die Variablen unabhängig voneinander folgende Bedeutung haben:

$R^1$ Hydroxy, Amino, $C_1$-$C_{24}$-Alkoxy, $R^9$-COO-, $R^9$-NH-COO-, Polyalkoholrest;
$R^2$ bis $R^7$ $-(CH_2)_2-$, $-(CH_2)_3-$, $-(CH_2)_4-$, $-CH_2-CH(CH_3)-$, $-CH_2-CH(CH_2-CH_3)-$, $-CH_2-CHOR^{10}-CH_2-$;
$R^8$ Wasserstoff, Amino-$C_1$-$C_6$-alkyl, $C_1$-$C_{24}$-Alkyl, $R^9$-CO-, $R^9$-NH-CO-;
$R^9$ $C_1$-$C_{24}$-Alkyl;
$R^{10}$ Wasserstoff, $C_1$-$C_{24}$-Alkyl, $R^9$-CO-;
A -CO-O-, -CO-B-CO-O-, -CO-NH-B-NH-CO-O-;
B $-(CH_2)_t-$, gewünschtenfalls substituiertes Arylen;
n 1 oder, wenn $R^1$ einen Polyalkoholrest bedeutet, 1 bis 8;
s 0 bis 500;
t 1 bis 12;
u 1 bis 5000
v 0 bis 5000;
w 0 bis 5000;
x 1 bis 5000;
y 0 bis 5000;
z 0 bis 5000

als Beschichtungsmittel, Matrixbildner und/oder Verpackungsmaterial für Agrochemikalien.

**2.** Verwendung nach Anspruch 1, **dadurch gekennzeichnet, daß** die Pfropfpolymerisate erhältlich sind durch Polymerisation von

(a) Vinylacetat in Gegenwart von
(b) Polyalkylenoxiden, einseitig endgruppenverschlossenen Polyalkylenoxiden und/oder beidseitig endgruppenverschlossenen Polyalkylenoxiden.

**3.** Verwendung nach Anspruch 1 oder 2, **dadurch gekennzeichnet, daß** die Pfropfpolymerisate erhältlich sind durch Polymerisation von

(a) Vinylacetat in Gegenwart von
(b) Polyethylenglykolen eines mittleren Molekulargewichts (Zahlenmittel) von 500 bis 100 000.

**4.** Verwendung nach den Ansprüchen 1 bis 3, **dadurch gekennzeichnet, daß** die Vinylestereinheiten der Propfpolymerisate zu 20 bis 100 mol-% hydrolysiert sind.

**5.** Verwendung nach den Ansprüchen 1 bis 4, **dadurch gekennzeichnet, daß** die Polymerisation in Gegenwart von 0,1 bis 30 Gew.-% an Comonomeren (c), bezogen auf die Mischung aus Monomeren (a) und Comonomeren (c), durchgeführt wird.

**6.** Verwendung nach den Ansprüchen 1 bis 5, **dadurch gekennzeichnet, daß** es sich bei den Agrochemikalien um Saatgut, Dünnemittel oder Pflanzenschutzmittel handelt.

**7.** Verwendung nach den Ansprüchen 1 bis 6, **dadurch gekennzeichnet, daß** die Pfropfpolymerisate zur Beschichtung

von agrochemischen Zubereitungen in feinteiliger Form eingesetzt werden.

**8.** Verwendung nach den Ansprüchen 1 bis 6, **dadurch gekennzeichnet, daß** die Pfropf polymerisate als Matrixbildner in granulatförmigen agrochemischen Zubereitungen eingesetzt werden.

**9.** Verwendung nach den Ansprüchen 1 bis 6, **dadurch gekennzeichnet, daß** die Pfropfpolymerisate in Form von Folien mit einer Dicke von 10 bis 1000 μm als Verpackungsmaterial von agrochemischen Wirkstofformulierungen eingesetzt werden.

**10.** Agrochemische Zubereitungen in Tablettenform, die eine Formulierung einer oder mehrerer agrochemischer Wirkstoffe als Tablettenkern mit einer ein oder mehrere Pfropfpolymerisate gemäß den Ansprüchen 1 bis 5 enthaltenden Beschichtung aufweisen.

**11.** Agrochemische Zubereitungen in Granulatform, die einen oder mehrere agrochemische Wirkstoffe in einer ein oder mehrere Pfropfpolymerisate gemäß den Ansprüchen 1 bis 5 als Matrixbildner enthaltenden Matrix aufweisen.

**12.** Agrochemische Zubereitungen in Form von Einzelportionen für die Dosierung, bei denen eine agrochemische Wirkstofformulierung portionsweise in ein oder mehrere Propfpolymerisate gemäß den Ansprüchen 1 bis 5 enthaltende Folien verpackt ist.

## Claims

**1.** The use of water-soluble or water-dispersible film-forming graft polymers obtainable by free-radical polymerization of

(a) vinyl esters of aliphatic $C_1$-$C_{24}$-carboxylic acids in the presence of
(b) polyethers with an average molecular weight (number average) of at least 300 of the formula I

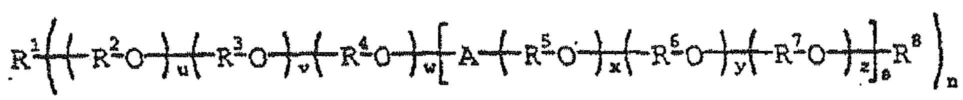

I

in which the variables independently of one another have the following meanings:

$R^1$ is hydroxyl, amino, $C_1$-$C_{24}$-alkoxy, $R^9$-COO-, $R^9$-NH-COO-, polyalcohol residue;
$R^2$ to $R^7$ are $-(CH_2)_2-$, $-(CH_2)_3-$, $-(CH_2)_4-$, $-CH_2-CH(CH_3)-$, $-CH_2-CH(CH_2-CH_3)-$, $-CH_2CHOR^{10}-CH_2-$;
$R^8$ is hydrogen, amino-$C_1$-$C_6$-alkyl, $C_1$-$C_{24}$-alkyl, $R^9$-CO-, $R^9$-NH-CO-;
$R^9$ is $C_1$-$C_{24}$-alkyl;
$R^{10}$ is hydrogen, $C_1$-$C_{24}$-alkyl, $R^9$-CO-;
A is -CO-O-, -CO-B-CO-O-, -CO-NH-B-NH-CO-O-;
B is $-(CH_2)_t-$, unsubstituted or substituted arylene;
n is 1 or, if $R^1$ is a polyalcohol residue, 1 to 8;
s is 0 to 500;
t is 1 to 12;
u is 1 to 5000;
v is 0 to 5000;
w is 0 to 5000;
x is 1 to 5000;
y is 0 to 5000;
z is 0 to 5000

as coating materials, matrix formers and/or packaging materials for agrochemicals.

**2.** The use according to claim 1, wherein the graft polymers are obtainable by polymerization of

(a) vinyl acetate in the presence of
(b) polyalkylene oxides, polyalkylene oxides which are end-group-capped at one end and/or polyalkylene oxides

which are end-group-capped at both ends.

3. The use according to claim 1 or 2, wherein the graft polymers are obtainable by polymerization of

(a) vinyl acetate in the presence of
(b) polyethylene glycols with an average molecular weight (number average) of 500 to 100 000.

4. The use according to any of claims 1 to 3, wherein 20 to 100 mol% of the vinyl ester units of the graft polymers have been hydrolyzed.

5. The use according to any of claims 1 to 4, wherein the polymerization is carried out in the presence of 0.1 to 30% by weight of comonomers (c), based on the mixture of monomers (a) and comonomers (c).

6. The use according to any of claims 1 to 5, wherein the agrochemicals are seed, fertilizers or crop protection products.

7. The use according to any of claims 1 to 6, wherein the graft polymers are employed in finely divided form for coating agrochemical preparations.

8. The use according to any of claims 1 to 6, wherein the graft polymers are employed as matrix formers in granular agrochemical preparations.

9. The use according to any of claims 1 to 6, wherein the graft polymers are used in the form of films with a thickness of 10 to 1000 μm as packaging material for agrochemical active ingredient formulations.

10. An agrochemical preparation in tablet form exhibiting a formulation of one or more agrochemical active ingredients as the tablet core with a coating comprising one or more graft polymers as set forth in claims 1 to 5.

11. An agrochemical preparation in granule form exhibiting one or more agrochemical active ingredients in a matrix comprising one or more graft polymers as set forth in claims 1 to 5 as matrix former.

12. An agrochemical preparation in the form of a single portion for dosage purposes, where an agrochemical active ingredient formulation is packaged portionwise in films comprising one or more graft polymers as set forth in claims 1 to 5.

## Revendications

1. Utilisation de polymères greffés filmogènes hydrosolubles ou dispersables dans l'eau, qui peuvent être obtenus par polymérisation radicalaire

(a) d'esters vinyliques d'acides carboxyliques aliphatiques en $C_1$-$C_{24}$ en présence
(b) de polyéthers ayant une masse moléculaire moyenne (moyenne en nombre) d'au moins 300, de formule générale I

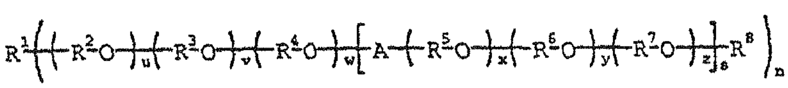

I

dans laquelle les variables ont, indépendamment les uns des autres, les significations suivantes :

$R^1$ représente un groupe hydroxy, amino, alcoxy en $C_2$-$C_{24}$, $R^9$-COO-, $R^9$-NH-COO-, un reste de polyalcool ;
$R^2$ à $R^7$ représentent $-(CN_3)_2-$, $-(CH_2)_3-$, $-(CH_2)_4-$, $-CH_2-CH(CH_3)-$, $-CH_2-CH(CH_2-CH_3)-$, $-CH_2-CHOR^{10}-CH_2-$ ;
$R^8$ représente un atome d'hydrogène, un groupe amino-alkyle($C_1$-$C_6$), alkyle en $C_1$-$C_{24}$, $R^9$-CO-, $R^9$-NH-CO- ;
$R^9$ représente un groupe alkyle en $C_1$-$C_{24}$ ;
$R^{10}$ représente un atome d'hydrogène, un groupe alkyle en $C_1$-$C_{24}$, $R^9$-CO- ;
A représente -CO-O-, -CO-B-CO-O-, -CO-NH-B-NH-CO-O- ;

B représente $-(CH_2)_t-$, un groupe arylène éventuellement substitué ;
n est 1 ou, lorsque $R^1$ représente un reste de polyalcool, va de 1 à 8 ;
s va de 0 à 500 ;
t va de 1 à 12 ;
u va de 1 à 5 000 ;
v va de 0 à 5 000 ;
w va de 0 à 5 000 ;
x va de 1 à 5 000 ;
y va de 0 à 5 000 ;
z va de 0 à 5 000 ;

en tant que produit d'enrobage, générateur de matrice et/ou matériau d'emballage pour produits agrochimiques.

**2.** Utilisation selon la revendication 1, **caractérisée en ce que** les polymères greffés peuvent être obtenus par polymérisation

(a) d'acétate de vinyle en présence
(b) de polyoxyalkylènes, de polyoxyalkylènes coiffés d'un côté par des groupes en bout de chaîne et/ou de polyoxyalkylènes coiffés des deux côtés par des groupes en bout de chaîne.

**3.** Utilisation selon la revendication 1 ou 2,
**caractérisée en ce que** les polymères greffés peuvent être obtenus par polymérisation

(a) d'acétate de vinyle en présence
(b) de polyéthylèneglycols ayant une masse moléculaire moyenne (moyenne en nombre) de 500 à 100 000.

**4.** Utilisation selon les revendications 1 à 3,
**caractérisée en ce que** les motifs ester vinylique des polymères greffés sont hydrolysés à raison de 20 à 100 % en moles.

**5.** Utilisation selon les revendications 1 à 4,
**caractérisée en ce que** la polymérisation est effectuée en présence de 0,1 à 30 % en poids de comonomères (c), par rapport au mélange de monomères (a) et de comonomères (c).

**6.** Utilisation selon les revendications 1 à 5,
**caractérisée en ce que** les produits agrochimiques consistent en des semences, des fertilisants ou des produits phytosanitaires.

**7.** Utilisation selon les revendications 1 à 6,
**caractérisée en ce que** les polymères greffés sont utilisés pour l'enrobage de préparations agrochimiques sous forme finement divisée.

**8.** Utilisation selon les revendications 1 à 6,
**caractérisée en ce que** les polymères greffés sont utilisés en tant que générateurs de matrice dans des préparations agrochimiques sous forme de granulés.

**9.** Utilisation selon les revendications 1 à 6,
**caractérisée en ce que** les polymères greffés sont utilisés sous forme de films ayant une épaisseur de 10 à 1 000 μm en tant que matériaux d'emballage de compositions de substances actives agrochimiques.

**10.** Préparations agrochimiques sous forme de comprimés, qui comportent une composition d'une ou plusieurs substances actives agrochimiques en tant que noyaux de comprimés avec un enrobage contenant un ou plusieurs polymères greffés selon les revendications 1 à 5.

**11.** Préparations agrochimiques sous forme de granulés, qui comportent une ou plusieurs substances actives agrochimiques dans une matrice contenant en tant que générateur de matrice un ou plusieurs polymères greffés selon les revendications 1 à 5.

**12.** Préparations agrochimiques sous forme de portions individuelles pour le dosage, dans lesquelles une composition de substance(s) active(s) agrochimique(s) est emballée par portions dans des films contenant un ou plusieurs polymères greffés selon les revendications 1 à 5.

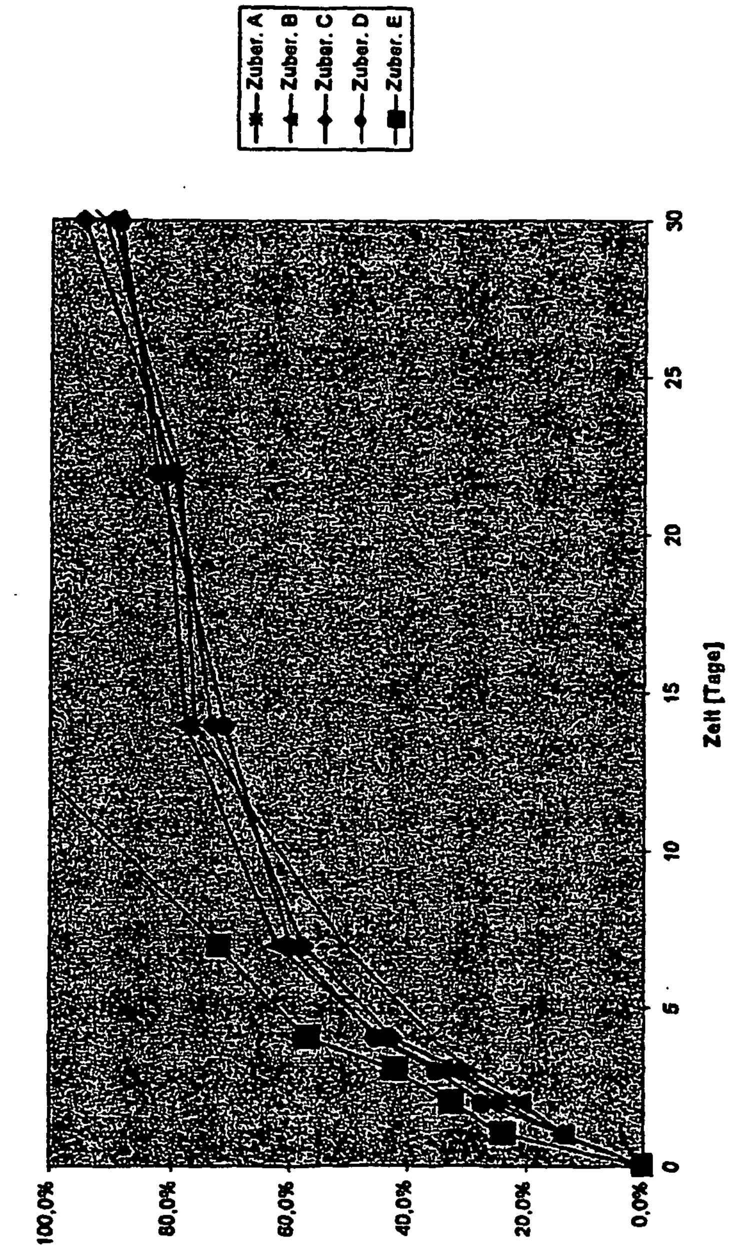
Zuber. A
Zuber. B
Zuber. C
Zuber. D
Zuber. E
100,0%
80,0%
60,0%
40,0%
20,0%
0,0%
Wirkstoffkonzentration [%]
0
5
10
15
20
25
30
Zeit [Tage]

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5328025 A
- WO 9737093 A
- JP 11228274 A
- DE 19709532 A
- EP 381181 A
- WO 9103149 A
- WO 9215197 A
- WO 9325074 A
- WO 0018375 A
- DE 10050958 A
- DE 1077430 B
- DE 1081229 B
- DE 1094457 B
- DE 10050958
- WO 9521880 A
- DE 4440858 A


### In der Beschreibung aufgeführte Nicht-Patentliteratur


- **H. Fikentscher.** *Cellulose-Chemie,* 1932, vol. 13, 58-6471-74
- **von W.C. Griffin.** *J. Soc. Cosmetic Chem.,* 1954, vol. 5, 249